(19) **Europäisches Patentamt / European Patent Office / Office européen des brevets**

(11) **EP 4 568 378 A1**

(12) **EUROPEAN PATENT APPLICATION**
published in accordance with Art. 153(4) EPC

(43) Date of publication:
**11.06.2025 Bulletin 2025/24**

(21) Application number: **23830197.2**

(22) Date of filing: **26.06.2023**

(51) International Patent Classification (IPC):
**H04W 72/04** *(2023.01)*    **H04W 72/12** *(2023.01)*

(52) Cooperative Patent Classification (CPC):
**H04L 5/00; H04W 72/04; H04W 72/12**

(86) International application number:
**PCT/CN2023/102483**

(87) International publication number:
**WO 2024/002020 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.07.2022 CN 202210779249**

(71) Applicant: **SHANGHAI LANGBO COMMUNICATION TECHNOLOGY COMPANY LIMITED**
**Shanghai 200240 (CN)**

(72) Inventors:
• **JIANG, Qi**
**Shanghai 201206 (CN)**
• **ZHANG, Xiaobo**
**Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS FOR WIRELESS COMMUNICATION**

(57) The present application discloses a method and apparatus for wireless communication. A node firstly receives a first information block, and the first information block is configured to determine M1 first-type cell sets and then receive the first signaling; the M1 first-type cell sets are respectively associated with M1 second-type cell sets; the first signaling comprises at least a first field and a second field; the first field in the first signaling indicates "1", and the second field in the second signaling is used for indicating a first cell set from the M1 first-type cell sets; or the first field in the first signaling indicates "0", and the second field in the second signaling is used for indicating a second cell set from the M1 second-type cell sets; any serving cell in the second cell set is a serving cell in the first cell set. The present application improves the relationship between uplink and downlink carriers when a single DCI schedules a plurality of carriers to improve the overall performance.

FIG. 2

## Description

## FIELD OF TECHNOLOGY

The present invention relates to a method and apparatus in a wireless communication system, and more particularly, to a multi-carrier transmission scheme and apparatus in a wireless communication system.

## BACKGROUND

The application scenarios of future wireless communication systems are becoming increasingly diversified, and different application scenarios impose different performance requirements on the system. In order to meet the diverse performance requirements of various application scenarios, it was decided to conduct research on New Radio (NR) (or 5G) from the 3rd Generation Partner Project (3GPP) Radio Access Network (RAN) Plenary Meeting #72, and the 3GPP RAN Plenary Meeting #75 approved Work Item (WI) for the New Radio (NR), initiating standardization work for the NR.

According to the new radio, multi-carrier (including carrier aggregation and dual connectivity, etc) technology is an important component. To adapt to diverse application scenarios and meet different requirements, 3GPP has been continuously evolving multi-carrier technology since Rel-15.

## SUMMARY

In a multi-carrier communication process, such as Carrier Aggregation (CA), the system supports Cross Carrier Scheduling. In networks supported by existing standards, such as R17 and the previous version of 5G New Radio (NR), for a plurality of scheduled carriers, only scheduling is supported on a corresponding carrier or a corresponding Physical Downlink Control Channel (PDCCH) respectively, but not scheduling via the same PDCCH on the same carrier. In the Rel-18 related discussions, the topic of multi-carrier enhancement began to be addressed, under which a single PDCCH can simultaneously schedule data channels located on a plurality of carriers to improve overall performance.

The present application discloses a solution to the problem of simultaneous scheduling of a plurality of carriers by one PDCCH in an NR multi-carrier system. It should be noted that in describing the present application, only PDCCH scheduling in a multi-carrier is taken as a typical application scenario or example; the present application is also applicable to other scenarios faced with similar problems (such as other scenarios having higher requirements on the capacity of a control channel, including but not limited to a capacity enhancement system, a system using a higher frequency, a coverage enhancement system, unauthorized frequency domain communication, Internet of Things (IoT), Ultra Reliable Low Latency Communication (URLLC) network, vehicle networking, etc.), and similar technical effects can also be achieved. In addition, using a unified solution for different scenarios (including but not limited to multi-carrier scenarios) also helps to reduce hardware complexity and cost. In the absence of conflicts, the embodiments and features in the embodiments of the first node device in the present application may be applied to the second node device, and vice versa. In particular, for the explanation of Terminology, nouns, functions, variables in the present application (if not otherwise specified), reference is made to the definitions in the 3GPP's specification protocols TS36 series, TS38 series, and TS37 series. Where necessary, reference may be made to the 3GPP standards TS38.211, TS38.212, TS38.213, TS38.214, TS38.215, TS38.321, TS38.331, TS38.305, and TS37.355 to aid in the understanding of the present application.

The present application discloses a method used in a first node for wireless communication, which includes:

receiving a first information block configured to determine M1 first-type cell sets, where any one of the M1 first-type cell sets includes at least one serving cell, and the M1 is a positive integer greater than 1;
receiving first signaling;
where the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

As an embodiment, the above method is characterized in that inaccuracy of CQI calculation caused by the first channel information belonging to the first-type is avoided.

As an embodiment, the above method is characterized in that a downlink carrier that can be simultaneously scheduled is associated with an uplink carrier that can be simultaneously scheduled, thereby reducing the complexity of blind detection.

As an embodiment, the above method is characterized in that for a value corresponding to the same second field, a cell set to which a carrier corresponding to uplink scheduling belongs is a subset of a cell set to which a carrier corresponding to downlink scheduling belongs to ensure corresponding to the same PDCCH Candidates when performing PDCCH blind detection to reduce the complexity of blind detection and avoid occupying excessive resources.

As an embodiment, the above method is characterized in that the number of cells used for uplink scheduling at the same time is less than the number of cells used for downlink scheduling at the same time, thereby reducing the complexity of the terminal device and meeting a design concept of the terminal.

According to an aspect of the present application, it is characterized in that the first cell set and the second cell set both correspond to a first indicator value, and the first indicator value is a non-negative integer; the first indicator value is used for determining at least one Control Channel Element (CCE) occupied by the first signaling which determines the first indicator value.

As an embodiment, the above method is characterized in that the blind detection method for determining the position of the first CCE occupied by the PDCCH candidate based on the Carrier Indicator in the current cross carrier scheduling is not changed.

According to an aspect of the present application, it is characterized by including:

receiving a second information block;
where a given first-type cell set is any one of the M1 first-type cell sets, and the given first-type cell set is associated to a given second-type cell set of the M1 second-type cell sets; the second information block is used for determining the given second-type cell set from the given first-type cell sets.

According to an aspect of the present application, it is characterized in that the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

As an embodiment, the above method is characterized in that: signaling overhead is reduced by determining, in a predefined manner, the relationship between the cell set for downlink scheduling and the cell set for uplink scheduling that correspond to the same value of the second field included by the first signaling.

According to an aspect of the present application, it is characterized in that the number of serving cells included by any one of the M1 first-type cell sets is not greater than a first threshold value, where the first threshold value is a predefined positive integer or the first threshold value is a configurable positive integer; and the size of a Downlink Control Information (DCI) format carried by the first signaling is related to the first threshold value.

As an embodiment, the above method is characterized in that the size of the DCI format carried by the first signaling is associated with the first threshold value to avoid waste of resources caused by the oversize of the DCI format carried by the first signaling.

According to an aspect of the present application, it is characterized by including:

receiving a first signal;
where the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

As an embodiment, the above method is characterized in that the first signal corresponds to downlink data scheduled on a plurality of carriers to improve transmission efficiency.

According to an aspect of the present application, it is characterized by including:

transmitting a second signal;
where the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

As an embodiment, the above method is characterized in that the second signal corresponds to uplink data scheduled on a plurality of carriers to improve transmission efficiency.

According to an aspect of the present application, it is characterized by including:

transmitting a third information block;
where the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

The present application discloses a method used in a second node for wireless communication, which includes:

transmitting a first information block configured to determine M1 first-type cell sets, where any one of the M1 first-type cell sets includes at least one serving cell, and the M1 is a positive integer greater than 1; and

transmitting first signaling;

where the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

According to an aspect of the present application, it is characterized in that the first cell set and the second cell set both correspond to a first indicator value, and the first indicator value is a non-negative integer; the first indicator value is used for determining at least one CCE occupied by the first signaling which determines the first indicator value.

According to an aspect of the present application, it is characterized by including:

transmitted a second information block;

where a given first-type cell set is any one of the M1 first-type cell sets, and the given first-type cell set is associated to a given second-type cell set of the M1 second-type cell sets; the second information block is used for determining the given second-type cell set from the given first-type cell sets.

According to an aspect of the present application, it is characterized in that the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

According to an aspect of the present application, it is characterized in that the number of serving cells included by any one of the M1 first-type cell sets is not greater than a first threshold value, where the first threshold value is a predefined positive integer or the first threshold value is a configurable positive integer; and the size of a DCI format carried by the first signaling is related to the first threshold value.

According to an aspect of the present application, it is characterized by including:

transmitted a first signal;

where the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

According to an aspect of the present application, it is characterized by including:

receiving a second signal;

where the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

According to an aspect of the present application, it is characterized by including:

receiving a third information block;

where the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

The present application discloses a first node for wireless communication, which includes:

a first transceiver configured to receive a first information block configured to determine M1 first-type cell sets, where any one of the M1 first-type cell sets includes at least one serving cell, and the M1 is a positive integer greater than 1;

a second transceiver configured to receive the first signaling;

where the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets;

any serving cell in the second cell set is a serving cell in the first cell set; at least one of the M1 first-type cell sets includes a plurality of serving cells.

The present application discloses a second node for wireless communication, which includes:

a third transceiver configured to transmit a first information block configured to determine M1 first-type cell sets, where any one of the M1 first-type cell sets includes at least one serving cell, and the M1 is a positive integer greater than 1; and
a fourth transceiver configured to transmit the first signaling;
where the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

As an embodiment, the advantage of the solution in the present application lies in: enabling a single PDCCH to simultaneously schedule a plurality of carriers while requiring only minor modifications to existing systems, particularly to blind detection, thereby enhancing overall system performance.

## BRIEF DESCRIPTION OF THE DRAWINGS

By referring to the detailed descriptions of the non-limiting embodiments in the following accompanying drawings, other features, objectives, and advantages of the present application will become more apparent:

FIG. 1 illustrates a process flow diagram showing a first node according to an embodiment of the present application;
FIG. 2 illustrates a schematic diagram showing a network architecture according to an embodiment of the present application;
FIG. 3 illustrates a schematic diagram showing an embodiment of a wireless protocol architecture of a user plane and a control plane according to an embodiment of the present application;
FIG. 4 illustrates a schematic diagram showing a first communication device and a second communication device according to an embodiment of the present application;
FIG. 5 illustrates a flow diagram showing transmission between a first node and a second node according to an embodiment of the present application;
FIG. 6 illustrates a flow diagram showing transmission of a second information block according to an embodiment of the present application;
FIG. 7 illustrates a flow diagram showing transmission of a first signal according to an embodiment of the present application;
FIG. 8 illustrates a flow diagram showing transmission of a second signal according to an embodiment of the present application;
FIG. 9 illustrates a flow diagram showing transmission of a third information block according to an embodiment of the present application;
FIG. 10 illustrates a schematic diagram showing M1 first-type cell sets and M1 second-type cell sets according to an embodiment of the present application;
FIG. 11 illustrates a schematic diagram showing a first cell set and a second cell set according to an embodiment of the present application;
FIG. 12 illustrates a block diagram showing a processing apparatus for use in a first node according to an embodiment of the present invention; and
FIG. 13 illustrates a block diagram showing a processing apparatus for use in a second node according to an embodiment of the present invention.

## DESCRIPTION OF THE EMBODIMENTS

The technical solutions of the present application will be further described in detail below with reference to the accompanying drawings. It should be noted that, in the absence of conflicts, the embodiments of the present application and the features in the embodiments may be arbitrarily combined with each other.

### Embodiment 1

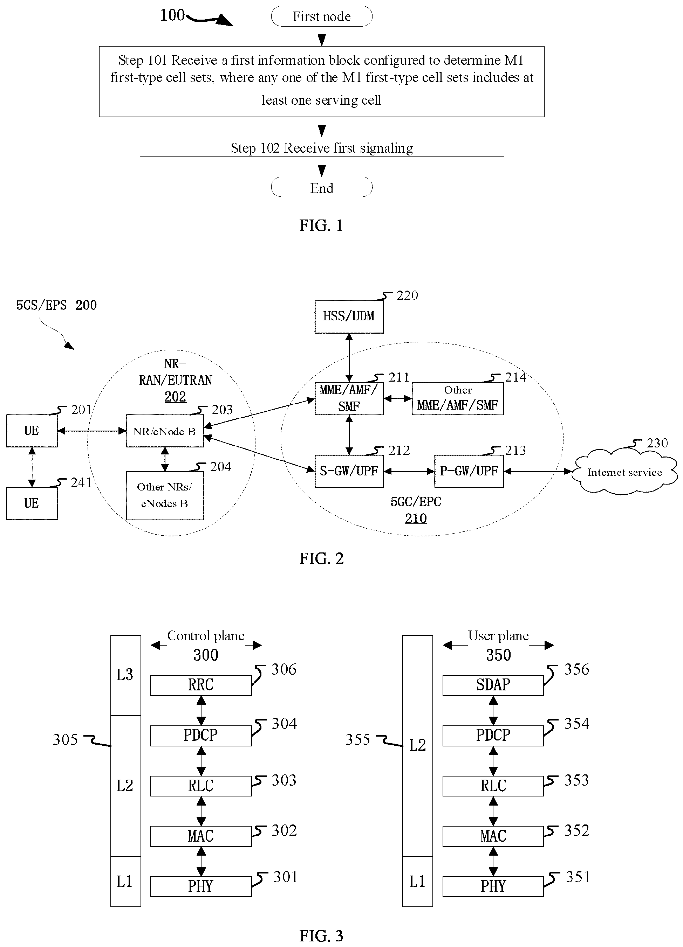

Embodiment 1 illustrates a process flow diagram showing a first node, as shown in FIG. 1. In a diagram 100 shown in FIG. 1, each block represents a step. In Embodiment 1, a first node in the present application receives a first information block in step 101, where the first information block is configured to determine M1 first-type cell sets, and any one of the M1 first-type cell sets includes at least one serving cell; the first signaling is received in step 102.

In Embodiment 1, the M1 is a positive integer greater than 1, where the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

As an embodiment, the first information block is transmitted over an air interface or a radio interface.

As an embodiment, the first information block includes all or part of a higher layer signaling or a physical layer signaling.

As an embodiment, the first information block includes all or part of a Radio Resource Control (RRC) layer signaling, or the first information block includes all or part of a Medium Access Control (MAC) layer signaling.

As an embodiment, the first information block includes all or part of a System Information Block (SIB).

As an embodiment, the first information block is UE-specific.

As an embodiment, the first information block is per carrier, or the first information block is configured per bandwidth part (BWP), or the first information block is configured per search space.

As an embodiment, the first information block is configured per band or per Frequency Range (FR).

As an embodiment, the first information block includes all or part of the fields in the IE (Information Element) "CellGroupConfig".

As an embodiment, the first information block includes a Field "secondaryCell Group".

As an embodiment, the first information block includes a Field "masterCellGroup".

As an embodiment, the first information block is configured Per Cell group, or the first information block is configured per Physical Uplink Control Channel (PUCCH) (Per PUCCH group).

As an embodiment, the first information block includes all or part of the fields in IE "ServingCellConfig".

As an embodiment, the first information block includes all or part of the fields in IE "BWP-Downlink".

As an embodiment, the first information block includes all or part of the fields in IE "crossCarrierSchedulingConfig".

As an embodiment, the first information block includes all or part of the fields in IE "PDCCH-ServingCellConfig".

As an embodiment, the first information block includes all or part of the fields in IE "pdcch-ConfigCommon".

As an embodiment, the first information block includes all or part of the fields in IE "BWP-Downlink-Common".

As an embodiment, the first information block includes all or part of the fields in IE "BWP-DownlinkDedicated".

As an embodiment, the first information block includes all or part of the fields in IE "pdcch-Config".

As an embodiment, the first information block includes all or part of the fields in IE "SearchSpace".

As an embodiment, the first information block includes all or part of the fields in IE "SearchSpaceExt-v1800" or the first information block includes all or part of the fields in IE "SearchSpaceExt2-r18".

As an embodiment, the first information block includes all or part of the fields in Downlink Control Information (DCI) format.

As an embodiment, the first information block is used for determining that the M1 first-type cell sets have the following meanings: the part or all included by the first information block is used for explicitly or implicitly indicating the M1 first-type cell sets.

As an embodiment, the first information block is used for determining that the M1 first-type cell sets have the following meanings: part or all the first information block included is used for explicitly or implicitly indicating any one of the M1 first-type cell sets.

As an embodiment, the first information block is used for determining that the M1 first-type cell sets have the following meanings: the part or all included by the first information block is used for explicitly or implicitly indicating all the serving cells included by any one of the M1 first-type cell sets.

As an embodiment, the first information block is used for determining that the M1 first-type cell sets have the following meanings: the part or all included by the first information block is used for explicitly or implicitly indicating a list of the M1 first-type cell sets.

As an embodiment, the first information block is used for determining that the M1 first-type cell sets have the following meanings: the part or all included by the first information block is used for explicitly or implicitly indicating the serving cells included by the M1 first-type cell sets.

As an embodiment, the first information block is used for determining that the M1 first-type cell sets have the following meanings: part or all the first information block included is used for explicitly or implicitly adding the M1 first-type cell sets into a list.

As an embodiment, the first information block is used for determining that the M1 first-type cell sets have the following meanings: part or all the first information block is used for explicitly or implicitly releasing the first-type cell sets to obtain a list of the M1 first-type cell sets.

As an embodiment, the first information block is used for determining that the M1 first-type cell sets have the following meanings: part or all the first information block included is used for explicitly or implicitly adding serving cells to form one of the M1 first-type cell sets.

As an embodiment, the first information block is used for determining that the M1 first-type cell sets have the following meanings: part or all the first information block is used for explicitly or implicitly releasing serving cells to one of the M1 first-type cell sets.

As an embodiment, the first information block is used for determining that the M1 first-type cell sets have the following meanings: the part or all included by the first information block is used for explicitly or implicitly indicating the number of serving cells included by at least one of the M1 first-type cell sets.

As an embodiment, the first information block is used for determining that the M1 first-type cell sets have the following meanings: the part or all included by the first information block is used for explicitly or implicitly indicating an upper limit value for the number of serving cells included by at least one of the M1 first-type cell sets.

As an embodiment, the first information block is used for determining that the M1 first-type cell sets have the following meanings: all or the part included by the first information block is used for explicitly or implicitly indicating all the serving cells included together by the M1 first-type cell sets, and all the serving cells included together by the M1 first-type cell sets constitute the M1 first-type cell sets according to a predefined rule.

As an embodiment, the first information block is used for determining that the M1 first-type cell sets have the following meanings: all or part of the first information block is used for explicitly or implicitly indicating the target first-type cell sets in the present application, and all the serving cells included by the target first-type cell sets constitute the M1 first-type cell set according to a predefined rule.

As an embodiment, the first information block is used for determining that the M1 first-type cell sets have the following meanings: all or the part included by the first information block is used for explicitly or implicitly indicating all the serving cells included together by the M1 first-type cell sets, and all the serving cells included together by the M1 first-type cell sets are indexed in sequence according to $0, \cdots, N_{cell} - 1$, where $N_{cell}$ represents the total number of all the serving cells comprised together by the M1 first-type cell sets, $d^{(Q)}$ represents a first-type cell set comprising $Q$ serving cells from the M1 first-type cell sets, and the index of the serving cells comprised by the first-type cell set $d^{(Q)}$ satisfies

$$ Q \cdot \left\{ \left\lfloor \frac{d^{(Q)} \cdot N_{cell}}{Q \cdot M^{(Q)}} \right\rfloor mod \lfloor N_{cell}/Q \rfloor \right\} + q $$

where $q = 0, \cdots, Q - 1$ and $M^{(Q)}$ represent the number of the first-type cell sets including $Q$ serving cells in the M1 first-type cell sets.

As an embodiment, the technical feature "the first information block is configured to determine M1 first-type cell sets" has the following meanings: all or the part included by the first information block is used for explicitly or implicitly indicating the target first-type cell sets in the present application, and all the serving cells included by the target first-type cell set are indexed in sequence according to $0, \cdots, N_{cell} - 1$, where $N_{cell}$ represents the total number of all the serving cells included by the target first-type cell set, and $d^{(Q)}$ represents one of the M1 first-type cell sets comprising $Q$ serving cells, and the index of the serving cells comprised in the first-type cell set $d^{(Q)}$ satisfies

$$ Q \cdot \left\{ \left\lfloor \frac{d^{(Q)} \cdot N_{cell}}{Q \cdot M^{(Q)}} \right\rfloor mod \lfloor N_{cell}/Q \rfloor \right\} + q $$

where $q = 0, \cdots, Q - 1$ and $M^{(Q)}$ represent the number of the first-type cell sets including $Q$ serving cells in the M1 first-type cell sets.

As an embodiment, the M1 first-type cell sets form a cell set list.

As an embodiment, the M1 second-type cell sets form a cell set list.

As an embodiment, the serving cells included by any one of the M1 first-type cell sets are activated cells.

As an embodiment, the serving cells included by any one of the M1 second-type cell sets are activated cells.

As an embodiment, any one of the serving cells included by any one of the first-type cell sets of the M1 first-type cell sets is a serving cell capable of transmitting Physical Downlink Shared Channel (PDSCH).

As an embodiment, any one serving cell included by any one of the second-type cell sets of the M1 second-type cell sets is a serving cell capable of transmitting Physical Uplink Shared Channel (PUSCH).

As an embodiment, any two of the first-type cell sets of the M1 first-type cell sets are different.

As an embodiment, any two of the M1 second-type cell sets are different.

As an embodiment, two of the M1 first-type cell sets are the same.

As an embodiment, two of the M1 second-type cell sets are the same.

As an embodiment, any one of the M1 first-type cell sets is a set of serving cells that can be simultaneously scheduled by one DCI format or one PDCCH.

As an embodiment, any one of the M1 second-type cell sets is a set of serving cells that can be simultaneously scheduled by either a DCI format or a PDCCH.

As an embodiment, any one of the M1 first-type cell sets is a set of serving cells to which PDSCHs that can be simultaneously scheduled by one DCI format or one PDCCH respectively belong.

As an embodiment, any one of the M1 second-type cell sets is a set of serving cells to which PUSCHs that can be simultaneously scheduled by one DCI format or one PDCCH respectively belong.

As an embodiment, any one of the M1 first-type cell sets is a list of serving cells.

As an embodiment, any one of the M1 second-type cell sets is a list of serving cells.

As an embodiment, all the serving cells included by one of the M1 first-type cell sets belong to the same band.

As an embodiment, all the serving cells included by one of the M1 second-type cell sets belong to the same band.

As an embodiment, all the serving cells included by one of the M1 first-type cell sets belong to the same frequency range (FR).

As an embodiment, all the serving cells included by one of the M1 second-type cell sets belong to the same frequency range.

As an embodiment, all the serving cells included by one of the M1 first-type cell sets use the same duplex mode of Time Division Duplexing (TDD) or Frequency Division Duplexing (FDD).

As an embodiment, all the serving cells included by one of the M1 second-type cell sets use the same duplex mode.

As an embodiment, a cell set of the M1 first-type cell sets includes two intra-band serving cells.

As an embodiment, a cell set of the M1 second-type cell sets includes two intra-band serving cells.

As an embodiment, one of the M1 first-type cell sets includes two inter-band serving cells.

As an embodiment, one of the M1 second-type cell sets includes two interband serving cells.

As an embodiment, two serving cells included by a first-type cell set of the M1 first-type cell sets belong to two different bands, respectively.

As an embodiment, two serving cells included by one of the M1 second-type cell sets belong to two different bands, respectively.

As an embodiment, two serving cells included by one of the M1 first-type cell sets belong to two different frequency ranges, respectively.

As an embodiment, two serving cells included by any one of the M1 second-type cell sets belong to two different frequency ranges, respectively.

As an embodiment, two serving cells included by any one of the M1 first-type cell sets use different duplex modes, respectively.

As an embodiment, two serving cells included by any one of the M1 second-type cell sets use different duplex modes, respectively.

As an embodiment, all the serving cells other than self-scheduling cells included by any one of the M1 first-type cell sets belong to the same band.

As an embodiment, all the serving cells other than the self-scheduling cells included by any one of the M1 second-type cell sets belong to the same band.

As an embodiment, all the serving cells other than the self-scheduling cells included by any one of the M1 first-type cell sets belong to the same frequency range.

As an embodiment, all the serving cells other than the self-scheduling cells included by any one of the M1 second-type cell sets belong to the same frequency range.

As an embodiment, all the serving cells other than the self-scheduling cells included by any one of the M1 first-type cell sets use the same duplex mode.

As an embodiment, all the serving cells other than the self-scheduling cells included by any one of the M1 second-type cell sets use the same duplex mode.

As an embodiment, any one of the M1 first-type cell sets includes a plurality of serving cells.

As an embodiment, any one of the M1 second-type cell sets includes a plurality of serving cells.

As an embodiment, at least one of the M1 first-type cell sets includes only one serving cell.

As an embodiment, at least one of the M1 second-type cell sets includes only one serving cell.

As an embodiment, the physical layer channel occupied by the first signaling includes a PDCCH.

As an embodiment, the first signaling corresponds to one DCI.

As an embodiment, the first signaling is a DL Grant.

As an embodiment, the first signaling is a UL Grant.

As an embodiment, the M1 first-type cell sets being respectively associated with the M1 second-type cell sets has the following meanings: any one of the M1 first-type cell sets and an associated second-type cell set in the M1 second-type cell sets correspond to the same indicator value.

As an embodiment, the M1 first-type cell sets being respectively associated with the M1 second-type cell sets has the following meanings: any one of the M1 first-type cell sets and an associated second-type cell set in the M1 second-type cell sets correspond to the same index value.

As an embodiment, the M1 first-type cell sets being respectively associated with the M1 second-type cell sets has the following meanings: any one of the M1 first-type cell sets and an associated second-type cell set in the M1 second-type cell sets correspond to the same indicator value.

Typically, the M1 first-type cell sets being respectively associated with the M1 second-type cell sets has the following meanings: a given first-type cell set is any one of the M1 first-type cell sets, and the given first-type cell set is associated to a given second-type cell set of the M1 second-type cell sets; any serving cell in the given second-type cell set is a serving cell in the given first-type cell set.

As an embodiment, at least one serving cell of the given first-type cell set is a serving cell other than the serving cells included by the given second-type cell set.

As an embodiment, at least one target first-type cell set exists in the M1 first-type cell sets, the target first-type cell set is associated with a target second-type cell set in the M1 second-type cell sets, and at least one serving cell existing in the target first-type cell set does not belong to the target second-type cell set.

As an embodiment, the first field included by the first signaling is used for determining a DCI format to which the first signaling corresponds.

As an embodiment, the first field included by the first signaling is used for determining whether the first signaling is used for scheduling PDSCH or for scheduling PUSCH.

As an embodiment, the first field included by the first signaling corresponds to "Identifier for DCI formats" information in the DCI.

As an embodiment, the first field included by the first signaling is used for indicating a transmission direction of a signal scheduled by the first signaling.

As an embodiment, the second field included by the first signaling is used for simultaneously scheduling one or more serving cells.

As an embodiment, the second field included by the first signaling is used for simultaneously scheduling one or more PDSCHs.

As an embodiment, the second field included by the first signaling is used for simultaneously scheduling one or more PUSCHs.

As an embodiment, the second field included by the first signaling is used for simultaneously scheduling one or more Transport Blocks (TBs).

As an embodiment, the second field included by the first signaling is used for simultaneously scheduling one or more bit blocks.

As an embodiment, the second field included by the first signaling is used for indicating one or more serving cells that are simultaneously scheduled.

As an embodiment, the second field included by the first signaling corresponds to "Carrier indicator" information in the DCI.

As an embodiment, the second field included by the first signaling corresponds to "Multi-Carrier indicator" information in the DCI.

As an embodiment, the second field included by the first signaling corresponds to "Multi-Carrier Scheduling" information in the DCI.

As an embodiment, the second field included by the first signaling corresponds to "Multi-Carrier Scheduling Indicator" information in the DCI.

As an embodiment, the M1 first-type cell sets correspond to M1 serving cell groups which can be downlink simultaneously scheduled.

As an embodiment, the M1 second-type cell sets correspond to M1 serving cell groups which can be uplink simultaneously scheduled.

As an embodiment, any one of the M1 first-type cell sets and the associated second-type cell set of the M1 second-type cell sets correspond to a value corresponding to the second field included by the first signaling.

As an embodiment, the M1 is not greater than 4.

As an embodiment, the M1 is not greater than 8.

As an embodiment, the M1 is not greater than 16.

As an embodiment, the M1 is not greater than 32.

As an embodiment, the number of bits occupied by the second field included by the first signaling is equal to 3.

As an embodiment, the number of bits occupied by the second field included by the first signaling is equal to 4.

As an embodiment, the number of bits occupied by the second field included by the first signaling is equal to 5.

As an embodiment, the number of bits occupied by the second field included by the first signaling is not greater than 6.

As an embodiment, only one of the M1 first-type cell sets includes 1 serving cell.

As an embodiment, at least one of the M1 first-type cell sets includes 1 serving cell.

As an embodiment, at least one of the M1 first-type cell sets includes a plurality of serving cells.

As an embodiment, any one of the M1 first-type cell sets includes a positive integer number of serving cells greater than 1.

As an embodiment, only one of the M1 second-type cell sets includes 1 serving cell.

As an embodiment, at least one of the M1 second-type cell sets includes 1 serving cell.

As an embodiment, at least one of the M1 second-type cell sets includes a plurality of serving cells.

As an embodiment, any one of the M1 second-type cell sets includes a positive integer number of serving cells greater than 1.

## Embodiment 2

Embodiment 2 illustrates a schematic diagram showing a network architecture, as shown in FIG. 2.

Embodiment 2 illustrates a schematic diagram showing a network architecture according to an embodiment of the present application, as shown in FIG. 2. FIG. 2 illustrates a V2X communication architecture among 5G NewRadio (NR), Long-Term Evolution (LTE) and Long-Term Evolution Advanced (LTE-A) system architectures. The 5G NR or LTE network architecture may be referred to as 5GSystem (5GS)/Evolved Packet System (EPS) or some other appropriate term.

The V2X communication architecture of Embodiment 2 includes a User Equipment (UE) 201, a UE241, a Next Generation Radio Access Network (NG-RAN) 202, a 5G Core Network (5GC)/Evolved Packet Core (EPC) 210, a Home Subscriber Server (HSS)/Unified Data Management (UDM) 220, a ProSe function 250, and a ProSe application server 230. The V2X communication architecture may be interconnected with other access networks, but these entities/interfaces are not shown for brevity. As shown, the V2X communication architecture provides packet-switched services, however, a person skilled in the art would readily appreciate that the various concepts presented throughout the present application can be extended to networks providing circuit-switched services or other cellular networks. The NG-RAN includes an NR Node B (gNB) 203 and another gNB204. The gNB203 provides user and control plane protocol termination towards the UE201. The gNB203 may be connected to another gNB204 via an Xn interface (e.g., backhaul). The gNB203 may also be referred to as a base station, a base transceiver station, a radio base station, a radio transceiver, a transceiver function, a basic service BSS, an extended service ESS, a TRP, or some other appropriate term. The gNB203 provides the UE201 with an access point to the 5GC/EPC210. Examples of UE201 include, but are not limited to: cellular phones, smartphones, Session Initiation Protocol (SIP) phones, laptop computers, personal digital assistants (PDAs), satellite radios, non-terrestrial base station communication devices, satellite mobile communication devices, Global Positioning System devices, multimedia apparatuses, video apparatuses, digital audio players (e.g., MP3 players), cameras, gaming consoles, unmanned aerial vehicles, aircraft, Narrowband Internet of Things devices, machine-type communication devices, land vehicles, automobiles, wearable devices, or any other functionally similar apparatus. A person skilled in the art may also refer to UE201 as a mobile station, a subscriber station, a mobile unit, a subscriber unit, a wireless unit, a remote unit, a mobile apparatus, a wireless apparatus, a wireless communications apparatus, a remote apparatus, a mobile subscriber station, an access terminal, a mobile terminal, a wireless terminal, a remote terminal, a handset, a user agent, a mobile client, a client, or some other appropriate term. The gNB203 is connected to the 5GC/EPC210 via the S1/NG interface. The 5GC/EPC210 includes Mobility Management Entity (MME)/Authentication Management Field (AMF)/Session Management Function (SMF) 211, other MME/AMF/SMF214, Service Gateway (S-GW)/UserPlaneFunction (UPF) 212, and Packet Date Network Gateway (P-GW)/UPF213. The MME/AMF/SMF211 is a control node that handles signaling between the UE201 and the 5GC/EPC210. Generally, the MME/AMF/SMF211 provides bearer and connection management. All user Internet Protocol (IP) packets are transmitted through the S-GW/UPF212, which is itself connected to the P-GW/UPF213. The P-GW provides UE IP address assignment as well as other functions. The P-GW/UPF213 is connected to an Internet service 230. Internet services 230 include operator-corresponding Internet Protocol services, which may include Internet, Intranet, IP Multimedia Subsystem (IMS), and packet switched streaming services. The ProSe function 250 is a logical function for a network-related behavior required by a Proximity-based Service (ProSe), which includes, e.g., Direct Provisioning Function (DPF), Direct Discovery Name Management Function, EPC-level Discovery ProSe Function, etc. The ProSe application server 230 has the functions of storing an EPC ProSe user identifier, mapping between an application layer user identifier and the EPC ProSe user identifier, and allocating a code suffix pool restricted by the ProSe, etc.

As an embodiment, the UE201 corresponds to the first node in the present application, and the gNB203 corresponds to the second node in the present application.

As an embodiment, the UE201 supports a plurality of carriers to be scheduled by the same DCI.

As an embodiment, the UE201 supports a plurality of serving cells being scheduled by the same DCI.

As an embodiment, the UE201 supports cross carrier scheduling.

As an embodiment, the NR Node B corresponds to the second node in the present application.

As an embodiment, the NR Node B supports a plurality of carriers to be scheduled by the same DCI.

As an embodiment, the NR Node B supports a plurality of serving cells to be scheduled by the same DCI.

As an embodiment, the NR Node B supports cross carrier scheduling.

As an embodiment, the NR Node B is a base station.

As an embodiment, the NR Node B is a cell.

As an embodiment, the NR Node B includes a plurality of cells.

As an embodiment, the NR Node B is used for determining transmissions on a plurality of serving cells.

As an embodiment, the first node in the present application corresponds to the UE201, and the second node in the present application corresponds to the NR node B.

As an embodiment, the first node and the second node in the present application are the UE201 and the gNB203, respectively.

As an embodiment, the first node in the present application is the UE201, and the second node in the present application is the UE241.

## Embodiment 3

Embodiment 3 shows a schematic diagram showing an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, RSU in gNB or V2X) and a second communication node device (RSU in gNB, UE or V2X) in three layers, namely Layers 1, 2, and 3. Layer 1 (L1 layer) is the lowest layer and implements various PHY (physical layer) signal processing functions. L1 will be referred to as PHY301 herein. Layer 2 (L2 layer) 305 is above the PHY301 and is responsible for the link between the first communication node device and the second communication node device through the PHY301. The L2 layer 305 includes a Medium Access Control (MAC) sub-layer 302, a Radio Link Control (RLC) sub-layer 303 and a Packet Data Convergence Protocol (PDCP) sub-layer 304, and these sub-layers terminate at the second communication node device. The PDCP sub-layer 304 provides multiplexing between different radio bearers and logical channels. The PDCP sub-layer 304 also provides security by encrypting packets, and the PDCP sub-layer 304 also provides handoff support for the first communication node device to the second communication node device. The RLC sub-layer 303 provides segmentation and reassembly of upper layer packets, retransmission of lost packets, and re-ordering of packets to compensate for out-of-order reception due to HARQ. The MAC sub-layer 302 provides multiplexing between logical and transmission channels. The MAC sub-layer 302 is also responsible for allocating various radio resources (e.g., resource blocks) within a cell among first communication node devices. The MAC sub-layer 302 is also responsible for HARQ operations. A Radio Resource Control (RRC) sub-layer 306 in a layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 includes a layer 1 (L1 layer) and a layer 2 (L2 layer), in the user plane 350, the radio protocol architecture for the first and second communication node devices is substantially the same for the physical layer 351, the PDCP sub-layer 354 in the L2 layer 355, the RLC sub-layer 353 in the L2 layer 355, and the MAC sub-layer 352 in the L2 layer 355 as the corresponding layers and sub-layers in the control plane 300, but the PDCP sub-layer 354 also provides header compression for upper layer packets to reduce radio transmission overhead. The L2 layer 355 in the user plane 350 further includes a Service Data Adaptation Protocol (SDAP) sub-layer 356 which is responsible for mapping between QoS flows and data Data Radio Bearer (DRB) to support diversity of services. Although not shown, the first communication node device may have several upper layers above the L2 layer 355, including a network layer (e.g., IP layer) terminating at the P-GW on the network side and an application layer terminating at the other end of the connection (e.g., remote UE, server, etc.).

As an embodiment, the wireless protocol architecture of FIG. 3 is applicable to the first node in the present application.

As an embodiment, the wireless protocol architecture of FIG. 3 is applicable to the second node in the present application.

As an embodiment, the PDCP304 of the second communication node device is used for generating a schedule for the first communication node device.

As an embodiment, the PDCP354 of the second communication node device is used for generating a schedule for the first communication node device.

As an embodiment, the first information block is generated from the MAC302 or the MAC352.

As an embodiment, the first information block is generated from the RRC306.

As an embodiment, the first signaling is generated from either the MAC302 or the MAC352.

As an embodiment, the first signaling is generated from either the PHY301 or the PHY351.

As an embodiment, the second information block is generated from the MAC302 or the MAC352.

As an embodiment, the second information block is generated from the RRC306.

As an embodiment, the first signal is generated from either the PHY301 or the PHY351.

As an embodiment, the first signal is generated from either the MAC302 or the MAC352.

As an embodiment, the first signal is generated from the RRC306.

As an embodiment, the second signal is generated from either the PHY301 or the PHY351.

As an embodiment, the second signal is generated from either the MAC302 or the MAC352.

As an embodiment, the second signal is generated from the RRC306.

As an embodiment, the third information block is generated from the MAC302 or the MAC352.

As an embodiment, the third information block is generated from the RRC306.

As an embodiment, the first node is a terminal.

As an embodiment, the first node is a relay.

As an embodiment, the second node is a terminal.

As an embodiment, the second node is a relay.

As an embodiment, the second node is a base station.

As an embodiment, the second node is a gNB.

As an embodiment, the second node is a Transmitter Receiver Point (TRP).

As an embodiment, the second node is used for managing a plurality of TRPs.

As an embodiment, the second node is a node for managing a plurality of cells.

As an embodiment, the second node is a node for managing a plurality of serving cells.

## Embodiment 4

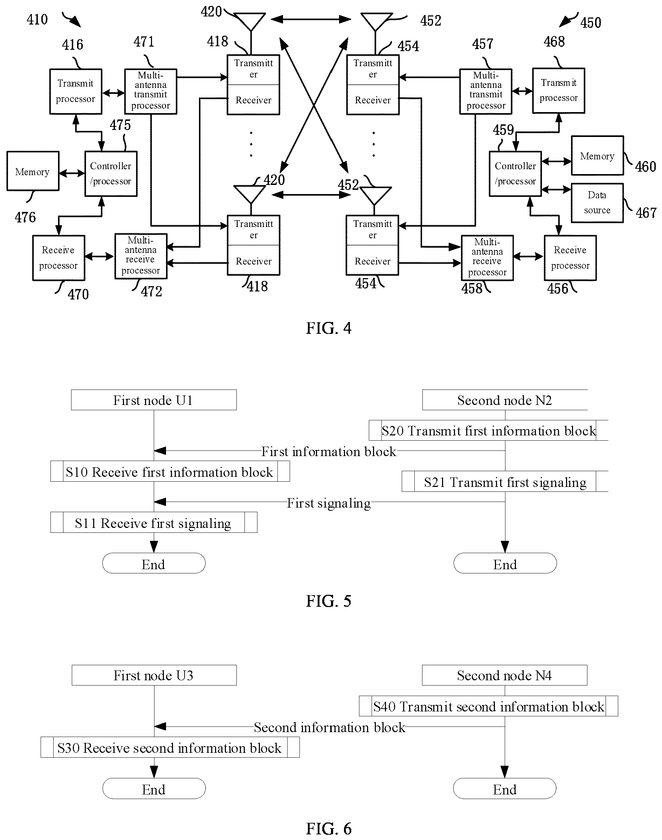

Embodiment 4 shows a schematic diagram showing a first communication device and a second communication device according to the present application, as shown in FIG. 4. FIG. 4 is a block diagram showing a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

In transmission from the second communication device 410 to the first communication device 450, upper layer packets from the core network are provided to the controller/processor 475 at the second communication device 410. The controller/processor 475 implements the functionality of the L2 layer. In transmission from the second communication device 410 to the first communication device 450, the controller/processor 475 provides header compression, encryption, packet fragmentation and reordering, multiplexing between logical and transmission channels, and radio resource allocation to the first communication device 450 based on various priority metrics. The controller/processor 475 is also responsible for retransmission of lost packets, and signaling to the first communication device 450. The transmit processor 416 and the multi-antenna transmit processor 471 perform various signal processing functions for the L1 layer (i.e., the physical layer). The transmit processor 416 implements coding and interleaving to facilitate forward error correction (FEC) at the second communication device 410, and mapping of signal clusters based on various modulation schemes (e.g., binary phase shift keying (BPSK), quadrature phase shift keying (QPSK), M-phase shift keying (M-PSK), M-quadrature amplitude modulation (M-QAM)). The multi-antenna transmit processor 471 performs digital spatial pre-coding, including codebook-based pre-coding and non-codebook-based pre-coding, and beamforming on the encoded and modulated symbols to generate one or more spatial streams. The transmit processor 416 then maps each spatial stream to a sub-carrier, multiplexes with a reference signal (e.g., pilot) in the time and/or frequency domain, and then uses an inverse fast Fourier transform (IFFT) to generate a physical channel carrying the time domain multi-carrier symbol stream. The multi-antenna transmit processor 471 then performs transmit analog pre-coding/beamforming operations on the time domain multi-carrier symbol stream. Each transmitter 418 converts a baseband multi-carrier symbol stream provided by the multi-antenna transmit processor 471 into a radio frequency stream, which is then provided to a different antenna 420.

During transmission from the second communication device 410 to the first communication device 450, at the first communication device 450, each receiver 454 receives a signal through its respective antenna 452. Each receiver 454 recovers information modulated onto a radio frequency carrier and provides a radio frequency stream to a receive processor 456, which converts the radio frequency stream into a baseband multi-carrier symbol stream. The receive processor 456 and a multi-antenna receive processor 458 perform various signal processing functions for the L1 layer. The multi-antenna receive processor 458 performs receive analog pre-coding/beamforming operations on the baseband multi-carrier symbol streams from the receiver 454. The receive processor 456 converts the baseband multi-carrier symbol stream after the receive analog pre-coding/-

beamforming operation from the time domain to the frequency domain using a Fast Fourier Transform (FFT). In the frequency domain, the physical layer data signals and the reference signals to be used for channel estimation are demultiplexed by a receive processor 456, and the data signals are subjected to multi-antenna detection in the multi-antenna receive processor 458 to recover any spatial streams destined for the first communication device 450. The symbols on each spatial stream are demodulated and recovered in the receive processor 456 and a soft decision is generated. The receive processor 456 then decodes and de-interleaves the soft decisions to recover the upper layer data and control signals transmitted by the second communication device 410 on the physical channel. The upper layer data and the control signals are then provided to the controller/processor 459. The controller/processor 459 performs the functions of the L2 layer. The controller/processor 459 may be associated with the memory 460 that stores program codes and data. The memory 460 may be referred to as a computer-readable medium. During transmission from the second communication device 410 to the second communication device 450, the controller/processor 459 provides de-multiplexing between transport and logical channels, packet reassembly, decryption, header decompression, control signal processing to recover upper layer packets from the core network. The upper layer packets are then provided to all protocol layers above the L2 layer. Various control signals may also be provided to L3 for L3 processing.

During transmission from the first communication device 450 to the second communication device 410, the data source 467 is used at the first communication device 450 to provide upper layer packets to the controller/processor 459. The data source 467 represents all protocol layers above the L2 layer. Similar to the transmission functions described at the second communication device 410 for communications from the second communication device 410 to the first communication device 450, the controller/processor 459 implements header compression, encryption, packet segmentation and reordering, multiplexing between logical and transport channels to execute L2 layer functions for both user plane and control plane operations based on wireless resource allocation. The controller/processor 459 is also responsible for retransmission of lost packets, and signaling to the second communication device 410. A transmit processor 468 performs modulation mapping, channel coding, the multi-antenna transmit processor 457 performs digital multi-antenna spatial pre-coding, including codebook-based pre-coding and non-codebook-based pre-coding, and beamforming, after which the transmit processor 468 modulates the resulting spatial stream into a multi-carrier/single-carrier symbol stream, which is provided via a transmitter 454 to the different antennas 452 after an analog pre-coding/beamforming operation in the multi-antenna transmit processor 457. Each transmitter 454 first converts a baseband symbol stream provided by the multi-antenna transmit processor 457 into a radio frequency symbol stream, which is then provided to the antenna 452.

During transmission from the first communication device 450 to the second communication device 410, the functionality at the second communication device 410 is similar to the receiving functionality at the first communication device 450 described during transmission from the second communication device 410 to the first communication device 450. Each receiver 418 receives radio frequency signals through its respective antenna 420, converts the received radio frequency signals to baseband signals, and provides the baseband signals to a multi-antenna receive processor 472 and a receive processor 470. The receive processor 470 and the multi-antenna receive processor 472 collectively perform the functions of the L1 layer. The controller/processor 475 implements the L2 layer functions. The controller/processor 475 may be associated with the memory 476 that stores program codes and data. The memory 476 may be referred to as a computer-readable medium. During transmission from the first communication device 450 to the second communication device 410, the controller/processor 475 provides de-multiplexing between transport and logical channels, packet reassembly, decryption, header decompression, control signal processing to recover upper layer packets from the UE450. Upper layer packets from the controller/processor 475 may be provided to the core network.

As an embodiment, the first communication device 450 apparatus includes: at least one processor and at least one memory, the at least one memory including computer program code; the at least one memory and the computer program code are configured for use with the at least one processor, the first communication device 450 apparatus at least: first receives a first information block configured to determine M1 first-type cell sets, where any one of the M1 first-type cell sets includes at least one serving cell, and the M1 is a positive integer greater than 1; then receives the first signaling; the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells..

As an embodiment, the first communication device 450 includes: a memory storing a program of computer-readable instructions that, when executed by at least one processor, result in actions including: a first information block configured to determine M1 first-type cell sets is received, where any one of the M1 first-type cell sets includes at least one serving cell, and the M1 is a positive integer greater than 1; the first signaling is then received; the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

As an embodiment, the second communication device 410 apparatus includes: at least one processor and at least one memory, the at least one memory including computer program code; the at least one memory and the computer program code are configured for use with the at least one processor. The second communication device 410 apparatus at least: first transmits a first information block configured to determine M1 first-type cell sets, where any one of the M1 first-type cell sets includes at least one serving cell, and the M1 is a positive integer greater than 1; then transmits the first signaling; the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

As an embodiment, the second communication device 410 apparatus includes: a memory storing a program of computer-readable instructions that, when executed by at least one processor, result in actions including: a first information block configured to determine M1 first-type cell sets is transmitted, where any one of the M1 first-type cell sets includes at least one serving cell, and the M1 is a positive integer greater than 1; the first signaling is then transmitted; the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

As an embodiment, the first communication device 450 corresponds to a first node in the present application.

As an embodiment, the second communication device 410 corresponds to a second node in the present application.

As an embodiment, the first communication device 450 is a UE.

As an embodiment, the first communication device 450 is a terminal.

As an embodiment, the first communication device 450 is a relay.

As an embodiment, the first communication device 450 is a terminal having a plurality of carriers simultaneously scheduled through a first PDCCH.

As an embodiment, the second communication device 410 is a base station.

As an embodiment, the second communication device 410 is a relay.

As an embodiment, the second communication device 410 is a network device.

As an embodiment, the second communication device 410 is a serving cell.

As an embodiment, the second communication device 410 is a TRP.

As an embodiment, the second communication device 410 is a base station having a plurality of carriers simultaneously scheduled through a first PDCCH.

As an embodiment, at least the first four of an antenna 452, a receiver 454, a multi-antenna receive processor 458, a receive processor 456, and a controller/processor 459 are used for receiving a first information block; at least the first four of an antenna 420, a transmitter 418, a multi-antenna transmit processor 471, a transmit processor 416, and a controller/processor 475 are used for transmitting a first information block.

As one implementation, at least the first four of the antenna 452, the transmitter 454, the multi-antenna transmit processor 457, the transmit processor 468, and the controller/processor 459 are used for receiving first signaling; at least the first four of the antenna 420, the receiver 418, the multi-antenna receive processor 472, the receive processor 470, and the controller/processor 475 are used for transmitting the first signaling.

As one implementation, at least the first four of the antenna 452, the transmitter 454, the multi-antenna transmit processor 457, the transmit processor 468, and the controller/processor 459 are used for receiving a second information block; at least the first four of the antenna 420, the receiver 418, the multi-antenna receive processor 472, the receive processor 470, and the controller/processor 475 are used for transmitting a second information block.

As one implementation, at least the first four of the antenna 452, the transmitter 454, the multi-antenna transmit processor 457, the transmit processor 468, and the controller/processor 459 are used for receiving a first signal; at least the first four of the antenna 420, the receiver 418, the multi-antenna receive processor 472, the receive processor 470, and the controller/processor 475 are used for transmitting a first signal.

As one implementation, at least the first four of the antenna 452, the transmitter 454, the multi-antenna transmit processor 457, the transmit processor 468, and the controller/processor 459 are used for transmitting a second signal; at least the first four of the antenna 420, the receiver 418, the multi-antenna receive processor 472, the receive processor 470, and the controller/processor 475 are used for receiving a second signal.

As one implementation, at least the first four of the antenna 452, the transmitter 454, the multi-antenna transmit processor 457, the transmit processor 468, and the controller/processor 459 are used for transmitting a third information block; at least the first four of the antenna 420, the receiver 418, the multi-antenna receive processor 472, the receive processor 470, and the controller/processor 475 are used for receiving a third information block.

**Embodiment 5**

Embodiment 5 illustrates a flow diagram showing a transmission between a first node and a second node of an embodiment, as shown in FIG. 5. In FIG. 5, the first node U1 communicates with the second node N2 via a wireless link. It is specifically noted that the order in the present embodiment does not limit the signal transmission order and the order of implementation in the present application. In the absence of conflicts, the embodiments, sub-embodiments, and dependent embodiments in Embodiment 5 may be applied to any one of Embodiments 6, 7, 8, and 9; conversely, in the absence of conflicts, any embodiment, sub-embodiment, or dependent embodiment in Embodiments 6, 7, 8, or 9 may be applied to Embodiment 5.

For **the first node U1,** a first information block is received in step S10; the first signaling is received in step S11.

For **the second node N2,** a first information block is transmitted in step S20; the first signaling is transmitted in step S21.

In Embodiment 5, the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one first-type cell set of the M1 first-type cell sets includes a plurality of serving cells.

Typically, the first cell set and the second cell set both correspond to a first indicator value, and the first indicator value is a non-negative integer; the first indicator value is used for determining at least one CCE occupied by the first signaling which determines the first indicator value.

As an embodiment, the second field included by the first signaling is used for explicitly indicating the first indicator value.

As an embodiment, the second field included by the first signaling is used for implicitly indicating the first indicator value.

As an embodiment, the second field included by the first signaling is used for determining the first indicator value.

As an embodiment, the first signaling is used for explicitly indicating the first indicator value.

As an embodiment, the first signaling is used for implicitly indicating the first indicator value.

As an embodiment, the first indicator value is a non-negative integer.

As an embodiment, the first indicator value is a positive integer.

As an embodiment, the first indicator value is used for determining the position of at least one CCE occupied by the first signaling in a Control Resource Set (CORESET) in which the CCE is located.

As an embodiment, the first indicator value is used for determining a position of at least one CCE occupied by the first signaling in a search space in which the CCE is located.

As an embodiment, the first indicator value is used for determining the position of at least one CCE occupied by the PDCCH alternative occupied by the first signaling in the CORESET in which the CCE is located.

As an embodiment, the first indicator value is used for determining a position of at least one CCE occupied by a PDCCH alternative occupied by the first signaling in a search space in which the CCE is located.

Typically, the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

As an embodiment, the value of K1 is used for determining the value of K2.

As an embodiment, the technical feature "the K2 serving cells are predefined among the K1 serving cells" includes the following meaning: the K2 serving cells are those with the smallest ServCellIndex values among the K1 serving cells.

As an embodiment, the technical feature "the K2 serving cells are predefined among the K1 serving cells" includes the following meaning: the K2 serving cells are those with the greatest ServCellIndex values among the K1 serving cells.

Typically, the number of serving cells included by any one of the M1 first-type cell sets is not greater than a first threshold value, where the first threshold value is a predefined or a configurable positive integer; and the size of a DCI format carried by the first signaling is related to the first threshold value.

As an embodiment, the first threshold is configured by RRC layer signaling.

As an embodiment, the first threshold is configured by MAC layer signaling.

As an embodiment, the first threshold value is configured by MAC Control Elements (CE).

As an embodiment, the first threshold is a maximum number of serving cells that are activated.

As an embodiment, the first threshold is a maximum number of serving cells that are configured.

As an embodiment, the first threshold is used for determining the size of the DCI format carried by the first signaling.

As an embodiment, the DCI format carried by the first signaling is used for simultaneously scheduling the transmission of data channels in a plurality of serving cells.

As an embodiment, the DCI format carried by the first signaling is a first DCI format.

As a sub-embodiment of the present embodiment, the first DCI format is one of 0_2 or 1_2.

As a sub-embodiment of the present embodiment, the first DCI format is one of 0_Q or 1_Q.

As a sub-embodiment of the present embodiment, the first DCI format is one of 0_2, 0_Q, 1_2, and 1_Q.

As a sub-embodiment of the present embodiment, the first DCI format is one of 0_1, 0_2, 0_Q, 1_1, 1_2, and 1_Q.

As a sub-embodiment of the present embodiment, the first DCI format is one of 0_1, 0_2, 1_1, and 1_2.

As a sub-embodiment of the present embodiment, the first DCI format is one of 0_0, 0_1, 1_0, and 1_1.

As a sub-embodiment of the present embodiment, the first DCI format is one of 0_0 and 1_0.

As a sub-embodiment of the present embodiment, the first DCI format is one of 0_0, 0_1, 0_2, 1_0, 1_1, and 1_2.

As a sub-embodiment of the present embodiment, the first DCI format is one of 0_0, 0_1, 0_2, 0_Q, 1_0, 1_1, 1_2, and 1_Q.

As a sub-embodiment of the present embodiment, Q in the present application is a positive integer greater than 2.

As a sub-embodiment of the present embodiment, Q in the present application is equal to 3.

As a sub-embodiment of the present embodiment, Q in the present application is equal to 4.

As a sub-embodiment of the present embodiment, Q in the present application is equal to 5.

## Embodiment 6

Embodiment 6 illustrates a flow diagram showing transmission of a second information block of an embodiment, as shown in FIG. 6. In FIG. 6, a first node U3 communicates with a second node N4 via a wireless link. It is specifically noted that the order in the present embodiment does not limit the signal transmission order and the order of implementation in the present application. In the absence of conflicts, the embodiments, sub-embodiments, and dependent embodiments in Embodiment 6 may be applied to any one of Embodiments 5, 7, 8, and 9; conversely, in the absence of conflicts, any embodiment, sub-embodiment, or dependent embodiment in Embodiments 5, 7, 8, or 9 may be applied to Embodiment 6.

For a **first node U3,** a second information block is received in step S30.

For a **second node N4,** a second information block is transmitted in step S40.

In Embodiment 6, a given first-type cell set is any one of the M1 first-type cell sets, and the given first-type cell set is associated to a given second-type cell set of the M1 second-type cell sets; the second information block is used for determining the given second-type cell set from the given first-type cell sets.

As an embodiment, the second information block is transmitted over an air interface or a radio interface.

As an embodiment, the second information block includes all or part of a higher layer signaling.

As an embodiment, the second information block includes all or part of a physical layer signaling.

As an embodiment, the second information block includes all or part of an RRC layer signaling.

As an embodiment, the second information block includes all or part of an MAC layer signaling.

As an embodiment, the second information block includes all or part of a system information block.

As an embodiment, the second information block is UE-specific.

As an embodiment, the second information block is per carrier, or the second information block is configured per BWP, or the second information block is configured per search space.

As an embodiment, the second information block is configured per band or per frequency range.

As an embodiment, the second information block includes all or part of the fields in IE "CellGroup-Config".

As an embodiment, the second information block includes the field "secondaryCellGroup" or the second information block includes the field "master-CellGroup".

As an embodiment, the second information block is configured per cell group, or the second information block is configured per PUCCH group.

As an embodiment, the second information block includes all or part of the fields in IE "ServingCell-Config".

As an embodiment, the second information block includes all or part of the fields in IE "BWP-Downlink".

As an embodiment, the second information block includes all or part of the fields in IE "crossCarrierSchedulingConfig".

As an embodiment, the second information block includes all or part of the fields in IE "PDCCH-ServingCellConfig".

As an embodiment, the second information block includes all or part of the fields in IE "pdcch-ConfigCommon".

As an embodiment, the second information block includes all or part of the fields in IE "BWP-DownlinkCommon".

As an embodiment, the second information block includes all or part of the fields in IE "BWP-DownlinkDedicated".

As an embodiment, the second information block includes all or part of the fields in IE "pdcch-Config".

As an embodiment, the second information block includes all or part of the fields in IE "SearchSpace".

As an embodiment, the second information block includes all or part of the fields in IE "SearchSpaceExt-v1800" or the second information block includes all or part of the fields in IE "SearchSpaceExt2-r18".

As an embodiment, the second information block includes all or part of the fields in the DCI format.

As an embodiment, the first information block includes RRC layer signaling and the second information block includes MAC layer signaling.

As an embodiment, the first information block and the second information block belong to the same RRC layer signaling.

As an embodiment, the first information block and the second information block are respectively two different fields in the same RRC layer signaling.

As an embodiment, the first information block and the second information block are respectively two associated fields in the same RRC layer signaling.

As an embodiment, step S30 precedes step S10 in Embodiment 5.

As an embodiment, step S40 precedes step S20 in Embodiment 5.

As an embodiment, step S30 follows step S10 and precedes step S11 in Embodiment 5.

As an embodiment, step S40 follows step S20 and precedes step S21 in Embodiment 5.

As an embodiment, step S30 occurs simultaneously with step S10 in Embodiment 5.

As an embodiment, step S40 occurs simultaneously with step S20 in Embodiment 5.

## Embodiment 7

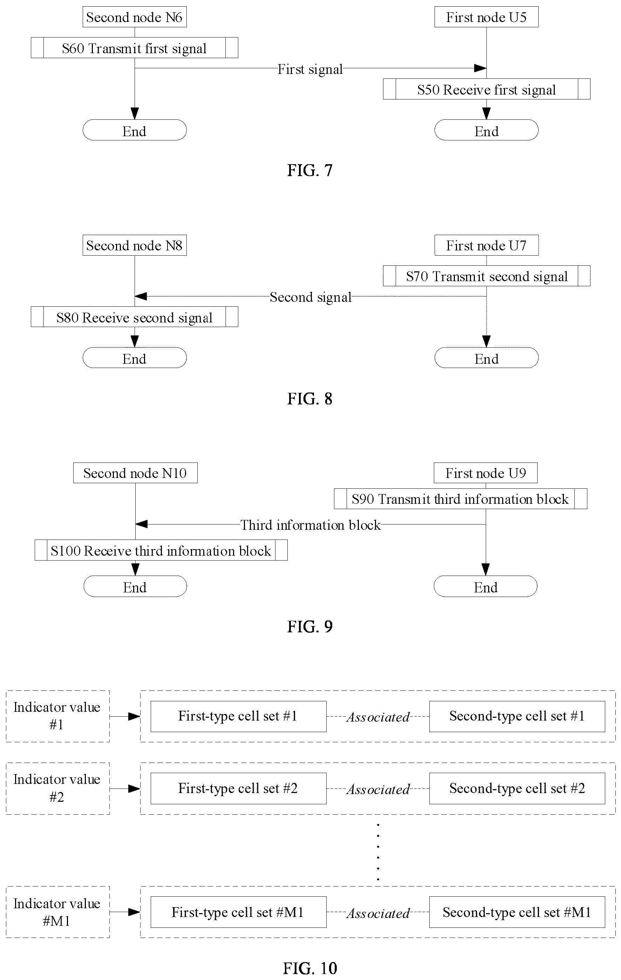

Embodiment 7 illustrates a flow diagram of transmission of the first signal of an embodiment, as shown in FIG. 7. In FIG. 7, the first node U5 communicates with the second node N6 via a wireless link. It is specifically noted that the order in the present embodiment does not limit the signal transmission order and the order of implementation in the present application. In the absence of conflicts, the embodiments, sub-embodiments, and dependent embodiments in Embodiment 7 may be applied to any one of Embodiments 5, 6, 8, and 9; conversely, in the absence of conflicts, any embodiment, sub-embodiment, or dependent embodiment in Embodiments 5, 6, 8, or 9 may be applied to Embodiment 7.

For **the first node U5,** a first signal is received in step S50.

For **the second node N6,** a first signal is transmitted in step S60.

In Embodiment 7, the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

As an embodiment, the physical layer channel occupied by the first signal includes PDSCH.

As an embodiment, the transmission channel corresponding to the first signal includes a Downlink Shared Channel (DL-SCH).

As an embodiment, the W1 first sub-signals occupy W1 PDSCHs, respectively.

As an embodiment, the W1 first sub-signals occupy W1 DL-SCHs, respectively.

As an embodiment, the W1 first sub-signals are generated by W1 TBs, respectively.

As an embodiment, the W1 first sub-signals are generated by W1 bit blocks, respectively.

As an embodiment, the W1 first sub-signals occupy W1 Hybrid Automatic Repeat reQuest (HARQ) process numbers, respectively.

As an embodiment, any frequency domain resource set in the W1 frequency domain resource sets occupies frequency domain resources corresponding to a positive integer number of Resource Blocks (RBs).

As an embodiment, the W1 frequency domain resource sets are respectively located in band resources corresponding to the W1 serving cells.

As an embodiment, the W1 serving cells correspond to W1 Component Carriers (CCs), respectively.

As an embodiment, the W1 serving cells correspond to W1 BWPs, respectively.

As an embodiment, the W1 serving cells correspond to W1 cells, respectively.

As an embodiment, the step S50 follows step S11 in Embodiment 5.

As an embodiment, the step S60 follows step S21 in Embodiment 5.

## Embodiment 8

Embodiment 8 illustrates a flow diagram of transmission of a second signal of an embodiment, as shown in FIG. 8. In FIG. 8, the first node U7 communicates with the second node N8 via a wireless link. It is specifically noted that the order in the present embodiment does not limit the signal transmission order and the order of implementation in the present application. In the absence of conflicts, the embodiments, sub-embodiments, and dependent embodiments in Embodiment 8 may be applied to any one of Embodiments 5, 6, 7, and 9; conversely, in the absence of conflicts, any embodiment, sub-embodiment, or dependent embodiment in Embodiments 5, 6, 7, or 9 may be applied to Embodiment 8.

For **the first node U7,** a second signal is transmitted in step S70.

For **the second node N8,** a second signal is received in step S80.

In Embodiment 8, the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

As an embodiment, the physical layer channel occupied by the second signal includes a PUSCH.

As an embodiment, the transmission channel to which the second signal corresponds includes a Uplink Shared Channel (UL-SCH).

As an embodiment, the W2 second sub-signals occupy W2 PUSCHs, respectively.

As an embodiment, the W2 second sub-signals occupy W2 UL-SCHs, respectively.

As an embodiment, the W2 second sub-signals are generated by W2 TBs, respectively.

As an embodiment, the W2 second sub-signals are generated by W2 bit blocks, respectively.

As an embodiment, the W2 second sub-signals occupy W2 HARQ process numbers, respectively.

As an embodiment, any one of the W2 frequency domain resource sets occupies frequency domain resources corresponding to a positive integer number of RBs.

As an embodiment, the W2 frequency domain resource sets are respectively located in band resources corresponding to the W2 serving cells.

As an embodiment, the W2 serving cells correspond to W2 CCs, respectively.

As an embodiment, the W2 serving cells correspond to W2 BWPs, respectively.

As an embodiment, the W2 serving cells correspond to W2 cells, respectively.

As an embodiment, step S70 follows step S11 in Embodiment 5.

As an embodiment, step S80 follows step S21 in Embodiment 5.

## Embodiment 9

Embodiment 9 illustrates a flow diagram showing transmission of a third information block of an embodiment, as shown in FIG. 9. In FIG. 9, a first node U9 communicates with a second node N10 via a wireless link. It is specifically noted that the order in the present embodiment does not limit the signal transmission order and the order of implementation in the present application. In the absence of conflicts, the embodiments, sub-embodiments, and dependent embodiments in Embodiment 9 may be applied to any one of Embodiments 5, 6, 7, and 8; conversely, in the absence of conflicts, any embodiment, sub-embodiment, or dependent embodiment in Embodiments 5, 6, 7, or 8 may be applied to Embodiment 9.

For **the first node U9,** a third information block is transmitted in step S90.

For **the second node N10,** a third information block is received in step S100.

In Embodiment 9, the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

As an embodiment, the third information block is transmitted over an air interface or a radio interface.

As an embodiment, the third information block includes all or part of a higher layer signaling or a physical layer signaling.

As an embodiment, the third information block is earlier than the first information block.

As an embodiment, the third information block is later than the first information block.

As an embodiment, the third information block includes all or part of the RRC signaling or the third information block includes all or part of the MAC layer signaling.

As an embodiment, the third information block is transmitted over a PUSCH or a Physical Uplink Control Channel (PUCCH).

As an embodiment, the third information block is used for indicating the capabilities of the first node device in the present application.

As an embodiment, the technical feature "the third information block is configured to indicate a capability parameter set of a transmitter of the third information block" has the following meanings: the third information block is used by the first node device in the present application to indicate a capability parameter set of the one node device.

As an embodiment, the technical feature "the third information block is configured to indicate a capability parameter set of a transmitter of the third information block" has the following meanings: all or part included by the third information block is used for explicitly or implicitly indicating the capability parameter set of the transmitter of the third information block.

As an embodiment, the third information block includes the IE "Phy-ParametersFRX-Diff" or the third information block includes the IE "UE-NR-Capability".

As an embodiment, the third information block includes a field "pdcch-MonitoringCA".

As an embodiment, the third information block includes a field "pdcch-BlindDetectionCA".

As an embodiment, the third information block includes a field "CA-ParametersNR".

As an embodiment, the third information block includes a field "searchSpaceSharingCA-DL".

As an embodiment, the third information block includes a field "searchSpaceSharingCA-UL".

As an embodiment, the third information block includes a field "SingleDCIMultipleCell-DL".

As an embodiment, the third information block includes a field "SingleDCIMultipleCel-UL".

As an embodiment, the third information block includes a field "SingleDCIMultipleCellsearchSpace-SharingCA-DL".

As an embodiment, the third information block includes a field "SingleDCIMultipleCellsearchSpace-SharingCA-UL".

As an embodiment, the third information block includes a field "Phy-Parameters".

As an embodiment, the capability parameter set of the transmitter of the third information block includes only the first parameter and the second parameter.

As an embodiment, the capability parameter set of the transmitter of the third information block further includes parameters other than the first parameter and the second parameter.

As an embodiment, the capability parameter set of the transmitter of the third information block includes parameters in the IE "Phy-ParametersFRX-Diff".

As an embodiment, the capability parameter set of the transmitter of the third information block includes parameters in the field "pdcch-MonitoringCA".

As an embodiment, the capability parameter set of the transmitter of the third information block includes parameters in the field "pdcch-BlindDetectionCA".

As an embodiment, the capability parameter set of the transmitter of the third information block includes parameters in the field "CA-ParametersNR".

As an embodiment, the capability parameter set of the transmitter of the third information block includes parameters in the field "Phy-Parameters".

As an embodiment, the first parameter and the second parameter are different.

As an embodiment, the first parameter and the second parameter are for downlink and uplink, respectively.

As an embodiment, the first parameter is per band and the second parameter is per band.

As an embodiment, the first parameter is per CC and the second parameter is per component carrier.

As an embodiment, the first parameter is per band combination and the second parameter is per band combination.

As an embodiment, the first parameter is per feature set and the second parameter is per feature set.

As an embodiment, the first parameter is a Boolean type parameter (BOOLEAN), or the first parameter is an integer, or the first parameter is a serving cell list, or the first parameter is an ENUMERATED type parameter, or the first parameter is a CHOICE type parameter, or the first parameter is a SEQUENCE type parameter.

As an embodiment, the second parameter is a BOOLEAN, or the second parameter is an integer, or the second parameter is a serving cell list, or the second parameter is an ENUMERATED type parameter, or the second parameter is a CHOICE type parameter, or the second parameter is a SEQUENCE type parameter.

As an embodiment, the transmitter of the third information block is the first node device in the present application.

As an embodiment, the number of downlink serving cells simultaneously scheduled by one PDCCH supported by the transmitter of the third information block may be equal to 1 or greater than 1.

As an embodiment, the number of uplink serving cells simultaneously scheduled by one PDCCH supported by the transmitter of the third information block may be equal to 1 or greater than 1.

As an embodiment, the number of downlink serving cells simultaneously scheduled by one PDCCH supported by the transmitter of the third information block is equal to or less than the number of PDSCHs simultaneously scheduled by one PDCCH supported by the transmitter of the third information block.

As an embodiment, the number of downlink serving cells simultaneously scheduled by one PDCCH supported by the transmitter of the third information block is not greater than the number of downlink TBs simultaneously scheduled by one PDCCH supported by the transmitter of the third information block.

As an embodiment, the number of uplink serving cells simultaneously scheduled by one PDCCH supported by the transmitter of the third information block is equal to or less than the number of PUSCHs simultaneously scheduled by one PDCCH supported by the transmitter of the third information block.

As an embodiment, the number of uplink serving cells simultaneously scheduled by one PDCCH supported by the transmitter of the third information block is not greater than the number of uplink TBs simultaneously scheduled by one PDCCH supported by the transmitter of the third information block.

As an embodiment, downlink serving cells that are simultaneously scheduled by one PDCCH are serving cells that are simultaneously scheduled by the same DL grant or DL assignment.

As an embodiment, downlink serving cells that are simultaneously scheduled by one PDCCH are downlink serving cells that can be at most simultaneously scheduled by the same PDCCH.

As an embodiment, downlink serving cells that are simultaneously scheduled by one PDCCH are serving cells to which all downlink channels or signals simultaneously scheduled by the same PDCCH belong, respectively.

As an embodiment, downlink serving cells that are simultaneously scheduled by one PDCCH are serving cells to which all downlink channels or signals simultaneously scheduled by the DCI format carried by the same PDCCH candidate belong, respectively.

As an embodiment, downlink serving cells that are simultaneously scheduled by one PDCCH are downlink serving cells that are simultaneously scheduled by the same DCI format.

As an embodiment, downlink serving cells that are simultaneously scheduled by one PDCCH are serving cells to which all PDSCHs simultaneously scheduled by the same PDCCH belong, respectively.

As an embodiment, downlink serving cells that are simultaneously scheduled by one PDCCH are serving cells to which all PDSCHs simultaneously scheduled by the same DCI format belong, respectively.

As an embodiment, uplink serving cells that are simultaneously scheduled by one PDCCH are serving cells that are simultaneously scheduled by the same uplink UL grant or uplink UL assignment.

As an embodiment, uplink serving cells that are simultaneously scheduled by one PDCCH are uplink serving cells that can be scheduled at most simultaneously by the same PDCCH.

As an embodiment, uplink serving cells that are simultaneously scheduled by one PDCCH are serving cells to which all uplink channels or signals simultaneously scheduled by the same PDCCH belong, respectively.

As an embodiment, uplink serving cells that are simultaneously scheduled by one PDCCH are serving cells to which all uplink channels or signals simultaneously scheduled by the DCI format carried by the same PDCCH candidate belong, respectively.

As an embodiment, uplink serving cells that are simultaneously scheduled by one PDCCH are serving cells to which all uplink channels or signals simultaneously scheduled by the same DCI format belong, respectively.

As an embodiment, uplink serving cells that are simultaneously scheduled by one PDCCH are serving cells to which all PUSCHs simultaneously scheduled by the same DCI format belong, respectively.

As an embodiment, uplink serving cells that are simultaneously scheduled by one PDCCH are serving cells to which all PUSCHs simultaneously scheduled by the same PDCCH belong, respectively.

As an embodiment, the technical feature that "the first parameter is used for indicating the number of downlink serving cells supported by the transmitter of the third information block and simultaneously scheduled by one PDCCH" has the following meanings: the first parameter is used by the first node in the present application to indicate the number of downlink serving cells simultaneously scheduled by one PDCCH that are supported by the transmitter of the third information block.

As an embodiment, the technical feature "the first parameter is used for indicating the number of downlink serving cells supported by the transmitter of the third information block and simultaneously scheduled by one PDCCH" has the following meanings: the first parameter is used for explicitly or implicitly indicating the number of downlink serving cells simultaneously scheduled by one PDCCH supported by the transmitter of the third information block.

As an embodiment, the technical feature "the first parameter is used for indicating the number of downlink serving cells supported by the transmitter of the third information block and simultaneously scheduled by one PDCCH" has the following meanings: the first parameter is used for indicating whether the transmitter of the third information block supports one PDCCH to simultaneously schedule a plurality of downlink serving cells.

As an embodiment, the technical feature "the first parameter is used for indicating the number of downlink serving cells supported by the transmitter of the third information block and simultaneously scheduled by one PDCCH" has the following meanings: the first parameter is used for indicating a maximum number of downlink serving cells simultaneously scheduled by one PDCCH supported by the transmitter of the third information block.

As an embodiment, the technical feature "the first parameter is used for indicating the number of downlink serving cells supported by the transmitter of the third information block and simultaneously scheduled by one PDCCH" has the following meanings: the first parameter is used for indicating whether the transmitter of the third information block supports one PDCCH to simultaneously schedule a plurality of downlink serving cells and to indicate a maximum number of downlink serving cells simultaneously scheduled by one PDCCH supported by the transmitter of the third information block when the transmitter of the third information block supports one PDCCH to simultaneously schedule a plurality of downlink serving cells.

As an embodiment, the technical feature "the first parameter is used for indicating the number of downlink serving cells supported by the transmitter of the third information block and simultaneously scheduled by one PDCCH" has the following meanings: the first parameter is used for indicating whether the transmitter of the third information block supports one PDCCH to simultaneously schedule a plurality of downlink serving cells; when the first parameter indicates that the transmitter of the third information block supports one PDCCH to simultaneously schedule a plurality of downlink serving cells, one parameter other than the first parameter or the second parameter included by the capability parameter set of the transmitter of the third information block is used for indicating a maximum number of downlink serving cells supported by the transmitter of the third information block that are simultaneously scheduled by one PDCCH.

As an embodiment, the technical feature "the first parameter is used for indicating the number of downlink serving cells supported by the transmitter of the third information block and simultaneously scheduled by one PDCCH" has the following meanings: the first parameter is used for indicating whether the transmitter of the third information block supports one PDCCH to simultaneously schedule a plurality of downlink serving cells; when the first parameter indicates that the transmitter of the third information block supports one PDCCH to simultaneously schedule a plurality of downlink serving cells, one parameter other than the first parameter or the second parameter included by the capability parameter set of the transmitter of the third information block is used for indicating a maximum number of carriers of downlink CAs supported by the transmitter of the third information block, and a maximum number of downlink serving cells supported by the transmitter of the third information block simultaneously scheduled by one PDCCH is equal to a maximum number of carriers of downlink CAs supported by the transmitter of the third information block.

As an embodiment, the expressions "the number of downlink serving cells simultaneously scheduled by one PDCCH supported by the transmitter of the third information block is equal to 1" and "the transmitter of the third information block supports only one PDCCH and can schedule only a single downlink serving cell" are equivalent or can be used interchangeably.

As an embodiment, the expressions of "the number of downlink serving cells simultaneously scheduled by one PDCCH supported by the transmitter of the third information block is greater than 1" and "the transmitter of the third information block supports one PDCCH to simultaneously schedule a plurality of downlink serving cells" are equivalent or can be used interchangeably.

As an embodiment, when the transmitter of the third information block supports one PDCCH to simultaneously schedule a plurality of downlink serving cells, the transmitter of the third information block certainly supports one PDCCH to schedule one downlink serving cell.

As an embodiment, the technical feature "the first parameter is used for indicating the number of downlink serving cells supported by the transmitter of the third information block and simultaneously scheduled by one PDCCH" has the following meanings: the first parameter is used for indicating the number of downlink serving cells simultaneously scheduled by one PDCCH supported by the transmitter of the third information block per band.

As an embodiment, the technical feature "the first parameter is used for indicating the number of downlink serving cells supported by the transmitter of the third information block and simultaneously scheduled by one PDCCH" has the following meanings: the first parameter is used for indicating the number of downlink serving cells simultaneously scheduled by one PDCCH supported by the transmitter of the third information block for cross-band combination.

As an embodiment, the technical feature that "the first parameter is used for indicating the number of uplink serving cells supported by the transmitter of the third information block and simultaneously scheduled by one PDCCH" has the following meanings: the first parameter is used by the first node device in the present application to indicate the number of uplink serving cells simultaneously scheduled by one PDCCH that are supported by the transmitter of the third information block.

As an embodiment, the technical feature "the first parameter is used for indicating the number of uplink serving cells supported by the transmitter of the third information block and simultaneously scheduled by one PDCCH" has the following meanings: the first parameter is used for explicitly or implicitly indicating the number of uplink serving cells simultaneously scheduled by one PDCCH supported by the transmitter of the third information block.

As an embodiment, the technical feature "the first parameter is used for indicating the number of uplink serving cells supported by the transmitter of the third information block and simultaneously scheduled by one PDCCH" has the following meanings: the first parameter is used for indicating whether the transmitter of the third information block supports one PDCCH to simultaneously schedule a plurality of uplink serving cells.

As an embodiment, the technical feature "the first parameter is used for indicating the number of uplink serving cells supported by the transmitter of the third information block and simultaneously scheduled by one PDCCH" has the following meanings: the first parameter is used for indicating a maximum number of uplink serving cells simultaneously scheduled by one PDCCH supported by the transmitter of the third information block.

As an embodiment, the technical feature "the first parameter is used for indicating the number of uplink serving cells supported by the transmitter of the third information block and simultaneously scheduled by one PDCCH" has the following meanings: the first parameter is used for indicating whether the transmitter of the third information block supports one PDCCH to simultaneously schedule a plurality of uplink serving cells and to indicate a maximum number of uplink serving cells simultaneously scheduled by one PDCCH supported by the transmitter of the third information block when the transmitter of the third information block supports one PDCCH to simultaneously schedule a plurality of uplink serving cells.

As an embodiment, the technical feature "the first parameter is used for indicating the number of uplink serving cells supported by the transmitter of the third information block and simultaneously scheduled by one PDCCH" has the following meanings: the first parameter is used for indicating whether the transmitter of the third information block supports one PDCCH to simultaneously schedule a plurality of uplink serving cells; when the transmitter of the third information block supports one PDCCH to simultaneously schedule a plurality of uplink serving cells, one parameter other than the first parameter or the second parameter included by the capability parameter set of the transmitter of the third information block is used for indicating a maximum number of uplink serving cells supported by the transmitter of the third information block that are simultaneously scheduled by one PDCCH.

As an embodiment, the technical feature "the first parameter is used for indicating the number of uplink serving cells supported by the transmitter of the third information block and simultaneously scheduled by one PDCCH" has the following meanings: the first parameter is used for indicating whether the transmitter of the third information block supports one PDCCH to simultaneously schedule a plurality of uplink serving cells; when the transmitter of the third information block supports one PDCCH to simultaneously schedule a plurality of uplink serving cells, one parameter other than the first parameter or the second parameter included by the capability parameter set of the transmitter of the third information block is used for indicating a maximum number of carriers of uplink CAs supported by the transmitter of the third information block, and a maximum number of uplink serving cells supported by the transmitter of the third information block simultaneously scheduled by one PDCCH is equal to a maximum number of carriers of uplink CAs supported by the transmitter of the third information block.

As an embodiment, the expressions "the number of uplink serving cells simultaneously scheduled by one PDCCH supported by the transmitter of the third information block is equal to 1" and "the transmitter of the third information block supports only one PDCCH and can schedule only a single uplink serving cell" are equivalent or can be used interchangeably.

As an embodiment, the expressions of "the number of uplink serving cells simultaneously scheduled by one PDCCH supported by the transmitter of the third information block is greater than 1" and "the transmitter of the third information block supports one PDCCH to simultaneously schedule a plurality of uplink serving cells" are equivalent or can be used interchangeably.

As an embodiment, when the transmitter of the third information block supports one PDCCH to simultaneously schedule a plurality of uplink serving cells, the transmitter of the third information block certainly supports one PDCCH to schedule one uplink serving cell.

As an embodiment, the technical feature "the first parameter is used for indicating the number of uplink serving cells supported by the transmitter of the third information block and simultaneously scheduled by one PDCCH" has the following meanings: the first parameter is used for indicating the number of uplink serving cells simultaneously scheduled by one PDCCH supported by the transmitter of the third information block per band.

As an embodiment, the technical feature "the first parameter is used for indicating the number of uplink serving cells supported by the transmitter of the third information block and simultaneously scheduled by one PDCCH" has the following meanings: the first parameter is used for indicating the number of uplink serving cells simultaneously scheduled by one PDCCH supported per band combination by the transmitter of the third information block.

**Embodiment 10**

Embodiment 10 illustrates a schematic diagram showing M1 first-type cell sets and M1 second-type cell sets according to an embodiment of the present application, as shown in FIG. 10. In FIG. 10, the M1 first-type cell sets respectively correspond to a first-type cell set # 1 to a first-type cell set # M1 in the figure, and the M1 second-type cell sets respectively correspond to a second-type cell set # 1 to a second-type cell set # M1 in the figure; the first-type cell set # 1 to the first-type cell set # M1 are respectively associated with the second-type cell set # 1 to the second-type cell set # M1, and the second field of the first signaling can indicate any one from an indicator value # 1 to an indicator value # M1; the indicator values # 1 to # M1 are associated to the first-type cell set # 1 to the first-type cell set # M1, respectively.

As an embodiment, when the first field of the first signaling is equal to "1", the indicator value # 1 to the indicator value # M1 are used for indicating the first-type cell set # 1 to the first-type cell set # M1, respectively.

As an embodiment, when the first field of the first signaling is equal to "0", the indicator values # 1 to # M1 are used for indicating the second-type cell set # 1 to the second-type cell set # M1, respectively.

**Embodiment 11**

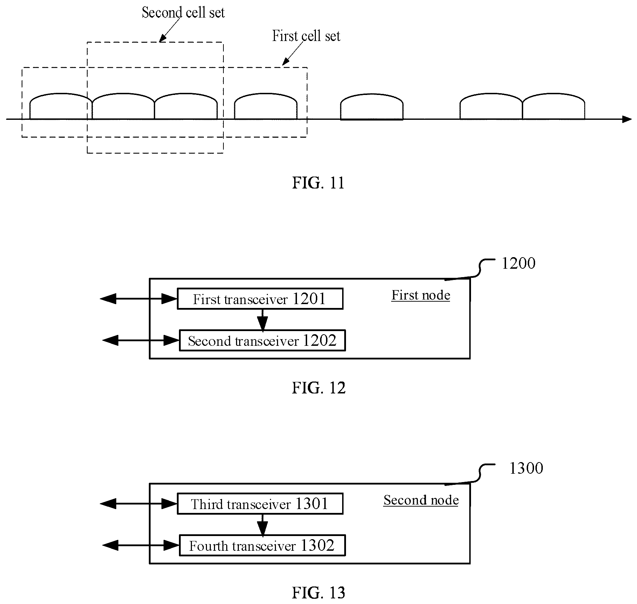

Embodiment 11 illustrates a schematic diagram showing a first cell set and a second cell set according to an embodiment of the present application, as shown in FIG. 11. In FIG. 11, each arc-shaped top area represents a serving cell, and the serving cell circled by each dotted line frame constitutes a first cell set or a second cell set; the first cell set includes the second cell set.

As an embodiment, all the serving cells included by the first cell set are configured to be schedulable by the same DCI format or by the same PDCCH.

As an embodiment, all the serving cells included by the first cell set have the same numerology.

As an embodiment, all the serving cells included by the first cell set have the same numerology.

As an embodiment, all the serving cells included by the first cell set have the same CP length.

As an embodiment, all the serving cells included by the first cell set have the same scheduling cell.

As an embodiment, all the serving cells included by the second cell set are configured to be schedulable by the same DCI format or by the same PDCCH.

As an embodiment, all the serving cells included by the second cell set have the same numerology.

As an embodiment, all the serving cells included by the second cell set have the same sub-carrier spacing.

As an embodiment, all the serving cells included by the second cell set have the same CP length.

As an embodiment, all the serving cells included by the second cell set have the same scheduling cell.

As an embodiment, the first cell set and the second cell set are configured by two different fields in one signaling, or two different IEs, or two different signaling, respectively.

As an embodiment, at least one higher layer signaling or higher layer parameter is used for configuring the second cell set.

As an embodiment, the second cell set includes all serving cells identified by the same identity or by the same index.

As an embodiment, the second cell set includes all serving cells that are simultaneously scheduled by higher layer signaling or parameter configuration, possibly by a DCI format or a PDCCH.

As an embodiment, the second cell set includes no less than 3 serving cells.

As an embodiment, the second cell set includes no more than 8 serving cells.

As an embodiment, an upper limit of the number of serving cells included by the second cell set is equal to 4 or 8.

As an embodiment, any two serving cells included by the second cell set belong to the same PUCCH group.

As an embodiment, any two serving cells included by the second cell set belong to the same cell group of cells.

As an embodiment, any two serving cells included by the second cell set belong to the same frequency range.

As an embodiment, any two serving cells included by the second cell set belong to the same band.

As an embodiment, the second cell set includes two serving cells belonging to two different frequency ranges, respectively.

As an embodiment, the second cell set includes two serving cells each belonging to two different band.

As an embodiment, any two serving cells included by the second cell set are Intra-band.

As an embodiment, the second cell set includes two serving cells that are Inter-band.

As an embodiment, the technical feature "the first cell set includes the second cell set" has the following meanings: the first cell set includes any one of the serving cells in the second cell set.

As an embodiment, the technical feature "the first cell set includes the second cell set" has the following meanings: any serving cell in the second cell set belongs to the first cell set.

As an embodiment, the technical feature "the first cell set includes the second cell set" has the following meanings: the first cell set and the second cell set are the same, or the first cell set includes any one serving cell in the second cell set and the first cell set further includes at least one serving cell other than the second cell set.

**Embodiment 12**

Embodiment 12 illustrates a block diagram showing a structure in a first node, as shown in FIG. 12. In FIG. 12, the first node 1200 includes a first transceiver 1201 and a second transceiver 1202.

A first transceiver 1201 is configured to receive a first information block configured to determine M1 first-type cell sets, where any one of the M1 first-type cell sets includes at least one serving cell, and the M1 is a positive integer greater than 1; and

a second transceiver 1202 is configured to receive the first signaling;
in Embodiment 12, the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one first-type cell set of the M1 first-type cell sets includes a plurality of serving cells.

As an embodiment, the first cell set and the second cell set both correspond to a first indicator value, and the first indicator value is a non-negative integer; the first indicator value is used for determining at least one CCE occupied by the first signaling which determines the first indicator value.

As an embodiment, the following is included:

the first transceiver 1201 is configured to receive a second information block;
where a given first-type cell set is any one of the M1 first-type cell sets, and the given first-type cell set is associated to a given second-type cell set of the M1 second-type cell sets; the second information block is used for determining the given second-type cell set from the given first-type cell sets.

As an embodiment, the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

As an embodiment, the number of serving cells included by any one of the M1 first-type cell sets is not greater than a first threshold value, where the first threshold value is a predefined positive integer or the first threshold value is a configurable positive integer; and the size of a DCI format carried by the first signaling is related to the first threshold value.

As an embodiment, the following is included:

the second transceiver 1202 is configured to receive a first signal;
where the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

As an embodiment, the following is included:

the second transceiver 1202 is configured to transmit a second signal;
where the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

As an embodiment, the following is included:

the first transceiver 1201 is configured to transmit a third information block;
where the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

As an embodiment, the first transceiver 1201 includes at least the first six of an antenna 452, a receiver/transmitter 454, a multi-antenna receive processor 458, a multi-antenna transmit processor 457, a receive processor 456, a transmit processor 468, and a controller/processor 459 of Embodiment 4.

As an embodiment, the second transceiver 1202 includes at least the first six of the antenna 452, the receiver/transmitter 454, the multi-antenna receive processor 458, the multi-antenna transmit processor 457, the receive processor 456, the transmit processor 468, and the controller/processor 459 of Embodiment 4.

## Embodiment 13

Embodiment 13 illustrates a block diagram showing a structure in a second node, as shown in FIG. 13. In FIG. 13, the second node 1300 includes a third transceiver 1301 and a fourth transceiver 1302.

A third transceiver 1301 is configured to transmit a first information block configured to determine M1 first-type cell sets, where any one of the M1 first-type cell sets includes at least one serving cell, and the M1 is a positive integer greater than 1; and

a fourth transceiver 1302 is configured to transmit the first signaling;
in Embodiment 13, the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one first-type cell set of the M1 first-type cell sets includes a plurality of serving cells.

As an embodiment, the first cell set and the second cell set both correspond to a first indicator value, and the first indicator value is a non-negative integer; the first indicator value is used for determining at least one CCE occupied by the first signaling which determines the first indicator value.

As an embodiment, the following is included:

the third transceiver 1301 is configured to transmit a second information block;
where a given first-type cell set is any one of the M1 first-type cell sets, and the given first-type cell set is associated to a given second-type cell set of the M1 second-type cell sets; the second information block is used for determining the given second-type cell set from the given first-type cell sets.

As an embodiment, the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

As an embodiment, the number of serving cells included by any one of the M1 first-type cell sets is not greater than a first threshold value, where the first threshold value is a predefined positive integer or the first threshold value is a configurable positive integer; and the size of a DCI format carried by the first signaling is related to the first threshold value.

As an embodiment, the following is included:

the fourth transceiver 1302 is configured to transmit a first signal;
where the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

As an embodiment, the following is included:

the fourth transceiver 1302 is configured to receive a second signal;
where the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

As an embodiment, the following is included:

the third transceiver 1301 is configured to receive a third information block;

where the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

As an embodiment, the third transceiver 1301 includes at least the first six of an antenna 420, a transmitter/receiver 418, a multi-antenna transmit processor 471, a multi-antenna receive processor 472, a transmit processor 416, a receive processor 470, and a controller/processor 475 of Embodiment 4.

As an embodiment, the fourth transceiver 1302 includes at least the first six of an antenna 420, a transmitter/receiver 418, a multi-antenna transmit processor 471, a multi-antenna receive processor 472, a transmit processor 416, a receive processor 470, and a controller/processor 475 of Embodiment 4.

It will be appreciated by a person skilled in the art that all or some of the steps of the above-described method may be performed by a program that instructs the associated hardware, and that the program may be stored in a computer-readable storage medium, such as a read-only memory, hard disk, or optical disk. Alternatively, all or a part of the steps of the above-described embodiments may be implemented using one or more integrated circuits. Accordingly, each module unit in the above-mentioned embodiments can be realized in the form of hardware, and can also be realized in the form of software functional modules, and the present application is not limited to any specific form of combination of software and hardware. The first node in the present application includes, but is not limited to, wireless communication devices such as mobile phones, tablet computers, notebooks, internet cards, low-power devices, eMTC devices, NB-IoT devices, vehicle-mounted communication devices, transportation vehicles, vehicles, RSUs, aircraft, airplanes, drones, and remote-controlled aircraft. The second node in the present application includes, but is not limited to, wireless communication devices such as macro base stations, micro base stations, small base stations, home base stations, relay base stations, eNBs, gNBs, transmission reception points (TRPs), GNSS, relay satellites, satellite base stations, aerial base stations, RSUs, drones, testing equipment (e.g., transceiving apparatuses that simulate partial functions of a base station or signaling testers), etc.

A person skilled in the art should understand that the present invention may be implemented in other specified forms without departing from its core or essential characteristics. Therefore, the presently disclosed embodiments should be regarded as illustrative rather than restrictive in any respect. The scope of the present invention is defined by the appended claims rather than the preceding description, and all modifications falling within the meaning and range of equivalency are deemed to be included therein.

## Claims

1. A first node for wireless communication, comprising:

   a first transceiver, receiving a first information block configured to determine M1 first-type cell sets, wherein any one of the M1 first-type cell sets includes at least one serving cell, and the M1 is a positive integer greater than 1;
   a second transceiver, receiving the first signaling;
   wherein the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

2. The first node according to claim 1, wherein the first cell set and the second cell set both correspond to a first indicator value, and the first indicator value is a non-negative integer; the first indicator value is used for determining at least one CCE occupied by the first signaling which determines the first indicator value.

3. The first node according to claim 1 or 2, comprising:

   the first transceiver, receiving a second information block;
   wherein a given first-type cell set is any one of the M1 first-type cell sets, and the given first-type cell set is associated to a given second-type cell set of the M1 second-type cell sets; the second information block is used for determining the given second-type cell set from the given first-type cell sets.

4. The first node device according to claim 1 or 2, wherein the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

5. The first node according to any one of claims 1 to 4, wherein the number of serving cells included by any one of the M1 first-type cell sets is not greater than a first threshold value, wherein the first threshold value is a predefined positive integer or the first threshold value is a configurable positive integer; and the size of a DCI format carried by the first signaling is related to the first threshold value.

6. The first node according to any one of claims 1 to 5, comprising:

   the second transceiver, receiving a first signal; wherein the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

7. The first node according to any one of claims 1 to 5, comprising:

   the second transceiver, transmitting a second signal; wherein the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

8. The first node device according to any one of claims 1 to 7, comprising:

   the first transceiver, transmitting a third information block; wherein the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

9. A second node for wireless communication, comprising:

   a third transceiver, transmitting a first information block configured to determine M1 first-type cell sets, wherein any one of the M1 first-type cell sets includes at least one serving cell, and the M1 is a positive integer greater than 1; and a fourth transceiver, transmitting the first signaling; wherein the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

10. The second node according to claim 9, wherein the first cell set and the second cell set both correspond to a first indicator value, and the first indicator value is a non-negative integer; the first indicator value is used for determining at least one CCE occupied by the first signaling which determines the first indicator value.

11. The second node according to claim 9 or 10, comprising:

    the third transceiver, transmitting a second information block; wherein a given first-type cell set is any one of the M1 first-type cell sets, and the given first-type cell set is associated to a given second-type cell set of the M1 second-type cell sets; the second information block is used for determining the given second-type cell set from the given first-type cell sets.

12. The second node according to claim 9 or 10, wherein the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

13. The second node according to any one of claims 9 to 12, wherein the number of serving cells included by any one of the M1 first-type cell sets is not greater than a first threshold value, wherein the first threshold value is a predefined positive integer or the first threshold value is a configurable positive integer; and the size of a DCI format carried by the first signaling is related to the first threshold value.

14. The second node according to any one of claims 9 to 13, comprising:

the fourth transceiver, transmitting a first signal; wherein the first field of the first signaling indicates "1 ", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

15. The second node according to any one of claims 9 to 13, comprising:

the fourth transceiver, receiving a second signal; wherein the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

16. The second node according to any one of claims 9 to 15, comprising:

the third transceiver 1301, receiving a third information block; wherein the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

17. A method used in a first node for wireless communication, comprising:

receiving a first information block configured to determine M1 first-type cell sets, wherein any one of the M1 first-type cell sets includes at least one serving cell, and the M1 is a positive integer greater than 1; receiving first signaling; wherein the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

18. The method used in a first node according to claim 17, wherein the first cell set and the second cell set both correspond to a first indicator value, and the first indicator value is a non-negative integer; the first indicator value is used for determining at least one Control Channel Element (CCE) occupied by the first signaling which determines the first indicator value.

19. The method used in a first node according to claim 17 or 18, comprising:

receiving a second information block; wherein a given first-type cell set is any one of the M1 first-type cell sets, and the given first-type cell set is associated to a given second-type cell set of the M1 second-type cell sets; the second information block is used for determining the given second-type cell set from the given first-type cell sets.

20. The method used in a first node according to claim 17 or 18, wherein the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

21. The method used in a first node according to any one of claims 17 to 20, wherein the number of serving cells included by any one of the M1 first-type cell sets is not greater than a first threshold value, wherein the first threshold value is a predefined positive integer or the first threshold value is a configurable positive integer; and the size of a DCI format carried by the first signaling is related to the first threshold value.

22. The method used in a first node according to any one of claims 17 to 21, comprising:

    receiving a first signal;
    wherein the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

23. The method used in a first node according to any one of claims 17 to 21, comprising:

    transmitting a second signal;
    wherein the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

24. The method used in a first node according to any one of claims 17 to 23, comprising:

    transmitting a third information block;
    wherein the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

25. A method used in a second node for wireless communication, comprising:

    transmitting a first information block configured to determine M1 first-type cell sets, wherein any one of the M1 first-type cell sets includes at least one serving cell, and the M1 is a positive integer greater than 1; and
    transmitting first signaling;
    wherein the M1 first-type cell sets are respectively associated with M1 second-type cell sets, and any second-type cell set in the M1 second-type cell sets includes at least one serving cell; the first signaling includes at least a first field and a second field; when the first field in the first signaling indicates "1", the second field in the first signaling is used for indicating a first cell set from the M1 first-type cell sets; when the first field in the first signaling indicates "0", the second field in the first signaling is used for indicating a second cell set from the M1 second-type cell sets; any serving cell in the second cell set is a serving cell in the first cell set; at least one of the M1 first-type cell sets includes a plurality of serving cells.

26. The method used in a second node according to claim 25, wherein the first cell set and the second cell set both correspond to a first indicator value, and the first indicator value is a non-negative integer; the first indicator value is used for determining at least one CCE occupied by the first signaling which determines the first indicator value.

27. The method used in a second node according to claim 25 or 26, comprising:

    transmitting a second information block;
    wherein a given first-type cell set is any one of the M1 first-type cell sets, and the given first-type cell set is associated to a given second-type cell set of the M1 second-type cell sets; the second information block is used for determining the given second-type cell set from the given first-type cell sets.

28. The method used in a second node according to claim 25 or 26, wherein the given first-type cell set is any one of the M1 first-type cell sets, and the given first-type cell set is associated to a given second-type cell set of the M1 second-type cell sets; the given first-type cell set includes K1 serving cells, and the given second-type cell set includes K2 serving cells; the K1 is a positive integer greater than 1, and the K2 is a positive integer not greater than the K1; the K2 serving cells are predefined in the K1 serving cells.

29. The method used in a second node according to any one of claims 25 to 28, wherein the number of serving cells included by any one of the M1 first-type cell sets is not greater than a first threshold value, wherein the first threshold value is a predefined positive integer or the first threshold value is a configurable positive integer; and the size of a DCI format carried by the first signaling is related to the first threshold value.

30. The method used in a second node according to any one of claims 25 to 29, comprising:

transmitting a first signal;
wherein the first field of the first signaling indicates "1", the first cell set includes W1 serving cells, and the W1 is a positive integer greater than 1; and the first signal includes W1 first sub-signals, and the W1 first sub-signals respectively occupy W1 frequency domain resource sets corresponding to the W1 serving cells.

31. The method used in a second node according to any one of claims 25 to 29, comprising:

receiving a second signal;
wherein the first field of the first signaling indicates "0"; the second cell set includes W2 serving cells, and the W2 is a positive integer greater than 1; and the second signal includes W2 second sub-signals, and the W2 second sub-signals respectively occupy W2 frequency domain resource sets corresponding to the W2 serving cells.

32. The method used in a second node according to any one of claims 25 to 31, comprising:

receiving a third information block;
wherein the third information block is configured to indicate a capability parameter set of a transmitter of the third information block, and the capability parameter set of the transmitter of the third information block at least includes a first parameter and a second parameter; the first parameter is used for indicating the number of downlink serving cells supported by the transmitter of the third information block and simultaneously scheduled by one PDCCH, and the second parameter is used for indicating the number of uplink serving cells supported by the transmitter of the third information block and simultaneously scheduled by one PDCCH.

100 ⟶

First node

Step 101 Receive a first information block configured to determine M1 first-type cell sets, where any one of the M1 first-type cell sets includes at least one serving cell

Step 102 Receive first signaling

End

FIG. 1

5GS/EPS 200

220

HSS/UDM

NR-RAN/EUTRAN 202

201 UE

203 NR/eNode B

204 Other NRs/eNodes B

241 UE

211 MME/AMF/SMF

214 Other MME/AMF/SMF

212 S-GW/UPF

213 P-GW/UPF

230 Internet service

5GC/EPC 210

FIG. 2

Control plane 300

L3 | RRC — 306
L2 | PDCP — 304
L2 | RLC — 303
L2 | MAC — 302
L1 | PHY — 301

305

User plane 350

L2 | SDAP — 356
L2 | PDCP — 354
L2 | RLC — 353
L2 | MAC — 352
L1 | PHY — 351

355

FIG. 3

410

420

452

450

416

471

418

454

457

468

| Transmit processor | Multi-antenna transmit processor | | Transmitter | | Transmitter | | Multi-antenna transmit processor | Transmit processor |
| | | | Receiver | | Receiver | | | |

475

459

Memory

Controller /processor

Controller /processor

Memory

460

476

Data source

467

Receive processor

Multi-antenna receive processor

Transmitter

Transmitter

Multi-antenna receive processor

Receive processor

Receiver

Receiver

470

472

418

454

458

456

420

452

**FIG. 4**

| First node U1 | | Second node N2 |
| | | S20 Transmit first information block |
| | ◄—————First information block————— | |
| S10 Receive first information block | | |
| | | S21 Transmit first signaling |
| | ◄—————First signaling————— | |
| S11 Receive first signaling | | |
| ( End ) | | ( End ) |

**FIG. 5**

| First node U3 | | Second node N4 |
| | | S40 Transmit second information block |
| | ◄—————Second information block————— | |
| S30 Receive second information block | | |
| ( End ) | | ( End ) |

**FIG. 6**

Second node N6

S60 Transmit first signal

First node U5

First signal

S50 Receive first signal

End

End

**FIG. 7**

Second node N8

First node U7

S70 Transmit second signal

Second signal

S80 Receive second signal

End

End

**FIG. 8**

Second node N10

First node U9

S90 Transmit third information block

Third information block

S100 Receive third information block

End

End

**FIG. 9**

Indicator value #1 → First-type cell set #1 ----Associated---- Second-type cell set #1

Indicator value #2 → First-type cell set #2 ----Associated---- Second-type cell set #2

Indicator value #M1 → First-type cell set #M1 ----Associated---- Second-type cell set #M1

**FIG. 10**

Second cell set

First cell set

**FIG. 11**

1200

First transceiver 1201

First node

Second transceiver 1202

**FIG. 12**

1300

Third transceiver 1301

Second node

Fourth transceiver 1302

**FIG. 13**

## INTERNATIONAL SEARCH REPORT

| International application No. |
|---|
| **PCT/CN2023/102483** |

### A. CLASSIFICATION OF SUBJECT MATTER

H04W 72/04(2023.01)i;  H04W 72/12(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; 3GPP: 多, 载波, 载波聚合, 双连接, 物理下行控制信道, 调度, 同时, 信息块, 信令, 域, 指示, multi, carrier, carrier aggregation, DC, Dual Connectivity, PDCCH, scheduling, dispatch, simultaneously, block, duration, field

### C. DOCUMENTS CONSIDERED TO BE RELEVANT

| Category* | Citation of document, with indication, where appropriate, of the relevant passages | Relevant to claim No. |
|---|---|---|
| A | CN 113498181 A (SHANGHAI LANGBO COMMUNICATION TECHNOLOGY CO., LTD.) 12 October 2021 (2021-10-12) description, paragraphs [0081]-[0289], [0343]-[0397], and [0699]-[0721] | 1-32 |
| A | CN 114448582 A (SHANGHAI LANGBO COMMUNICATION TECHNOLOGY CO., LTD.) 06 May 2022 (2022-05-06) description, paragraphs [0113]-[0133] | 1-32 |
| A | CN 113676302 A (VIVO COMMUNICATION TECHNOLOGY CO., LTD.) 19 November 2021 (2021-11-19) entire document | 1-32 |
| A | US 2021321400 A1 (QUALCOMM INC.) 14 October 2021 (2021-10-14) entire document | 1-32 |

☐ Further documents are listed in the continuation of Box C.    ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **07 November 2023** | **07 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/102483**

| Patent document cited in search report | | | Publication date (day/month/year) | Patent family member(s) | | | Publication date (day/month/year) |
|---|---|---|---|---|---|---|---|
| CN | 113498181 | A | 12 October 2021 | US | 2021314973 | A1 | 07 October 2021 |
| | | | | CN | 113498181 | B | 15 July 2022 |
| CN | 114448582 | A | 06 May 2022 | US | 2022141818 | A1 | 05 May 2022 |
| CN | 113676302 | A | 19 November 2021 | CN | 113676302 | B | 21 February 2023 |
| | | | | WO | 2021228079 | A1 | 18 November 2021 |
| US | 2021321400 | A1 | 14 October 2021 | WO | 2021207416 | A1 | 14 October 2021 |
| | | | | EP | 4133867 | A1 | 15 February 2023 |

Form PCT/ISA/210 (patent family annex) (July 2022)